# EUROPEAN PATENT APPLICATION

(11) **EP 4 509 286 A1**
(43) Date of publication of application: **19.02.2025**
(21) Application number: 22936721.4
(22) Date of filing: 12.04.2022
(51) Int. Cl.: B27N 3/02, C08H 8/00

(54) **SHAPED WOOD ARTICLE AND MANUFACTURING METHOD FOR SAME**

(71) Applicant: Daicel Corporation, Osaka-shi, Osaka 530-0011 (JP); Kyoto University, Kyoto-shi, Kyoto 606-8501 (JP)
(72) Inventor: WATANABE, Takashi, Kyoto-shi, Kyoto 606-8501 (JP); TOKUNAGA, Yuki, Kyoto-shi, Kyoto 606-8501 (JP); KITAYAMA, Kenji, Tokyo 108-8230 (JP); HASHIZUME, Tomohiro, Tokyo 108-8230 (JP)
(74) Representative: Hoffmann Eitle
(86) International application number: PCT/JP2022/017590
(87) International publication number: WO 2023/199402

(57) **Abstract**

The main component of a molded wood product is cellulose. The molded wood product has either or both of the following characteristics: (1) a flexural modulus of 4000 MPa or more, and (2) a flexural strength of 50 MPa or more. A woody pellet used as a material for the molded wood product may contain cellulose, hemicellulose, and lignin. A method for producing the molded wood product includes dissolving a cellulose-containing raw material in an organic acid to prepare a solution; adding water or an alkali to the solution to precipitate a solid content; recovering the solid content; and thermoforming the recovered solid content. The main component of the solid content is cellulose.

## Description

### Technical Field

The present disclosure relates to a molded wood product and a method for producing the molded wood product.

### Background Art

In recent years, there has been a demand for development of materials derived from biomass resources in place of materials derived from petroleum resources due to increased concern about environmental problems. In particular, there has been a demand for utilization of a woody biomass that does not compete with food and does not increase carbon dioxide in the atmosphere.

Examples of molded products produced by using a woody biomass and having a large thickness and hardness include a resin-injected wood material produced by injection of a resin into a wood, an acetylated wood material produced by acetylation of a wood, and wood plastic (WPC). Both the resin-injected wood material and the acetylated wood material require the use of a wood processed into a predetermined shape in advance, and pose a problem that it is impossible to greatly change the shape of a molded product at the time of producing the molded product (hereinafter this will be referred to as "shape-forming"). Wood plastic (WPC) is a composite material made of wood and plastic as raw materials, and is generally produced by using wood powder and thermoplastic plastic as raw materials. For example, WPC is produced by mixing plastic with wood powder of cedar timber from forest thinning or wood waste from plants. Such WPC is thermoformable and can be formed into a desired shape. However, WPC uses a resin or plastic derived from a petroleum resource as in the case of the resin-injected wood material, and is not necessarily 100% derived from a biomass. Thus, the adverse effects of WPC on the environment cannot be completely eliminated after disposal or landfilling thereof.

Attempts have been made to improve the molding processability of a molded product produced by using a woody biomass and having a low environmental load. For example, Patent Document 1 (JP 07-276320 A) discloses a woodwork produced by alkalinizing wood powder, contacting the alkalinized wood powder with an allyl group-containing compound to allylate the alkalinized wood powder, and charging the allylated wood powder into a mold, followed by heating and pressure molding.

Patent Document 2 (JP 2005-67064 A) discloses a fiber-reinforced plastic containing, as a reinforcing agent, a lignocellulose fiber in which cell lumens are eliminated. In Patent Document 2, an epoxy resin is used as a matrix resin. Patent Document 3 (JP 2016-169382 A) discloses a lignocellulose derivative in which the α-position of a phenylpropane unit constituting lignin is modified with at least one characteristic group selected from the group consisting of an acyloxy group, an oxy group, and a thio group. Patent Document 3 describes that a molded product can be produced by adding any synthetic polymer as a matrix material to a fiber or fiber aggregate containing the lignocellulose derivative.

In addition, there is a technique called pulp molding in which a fiber material (pulp) obtained by dissolving plant fibers in water is shape-formed in a metallic mold to form a three-dimensional shape. Many proposals have also been made for this technique. For example, Patent Document 4 (JP 2001-48151 A) discloses a pulp-molded body produced by making paper from a pulp slurry containing an agent for suppressing hydrogen bonds between pulp fibers, followed by dehydration, pressurization, and drying. The patent document describes that the molded body has a density of from 0.4 to 2 g/cm³ and a thickness of from 0.2 to 3 mm.

### Citation List

### Patent Document

Patent Document 1: JP 07-276320 A
Patent Document 2: JP 2005-67064 A
Patent Document 3: JP 2016-169382 A
Patent Document 4: JP 2001-48151 A

### Summary of Invention

### Technical Problem

The woodwork proposed in Patent Document 1 is produced by adhesion and solidification of wood powder particles having allylated and plastic surfaces by heating and pressurization. Accordingly, it is considered that the woodwork described in Patent Document 1 does not have sufficient strength as a molded product. The techniques of Patent Documents 2 and 3 require a matrix material which is a synthetic polymer in addition to lignocellulose. Accordingly, the molded products described in Patent Documents 2 and 3 have a low biomaterial proportion.

The technique of Patent Document 4 is a technique for solidifying a slurry in which pulp is dispersed in water to form a molded product (i.e., a paper product), and is merely an improved technique of pulp molding in the related art. In the technique of Patent Document 4, cellulose fibers are merely held by hydrogen bonds, and it is difficult to produce a molded body having a smooth surface. In addition, the molded body has high gas permeability and does not serve as a substitute for a plastic product in the related art.

An object of the present disclosure is to provide a molded wood product (wood mold) produced by using cellulose, particularly lignocellulose, more preferably a woody biomass as a raw material and having excellent moldability and improved mechanical properties.

From another viewpoint, the woody biomass or the like contains a natural polymer mixture called lignocellulose. Specifically, lignocellulose is composed of two carbohydrate polymers, i.e., cellulose and hemicellulose, and an aromatic-rich polymer, i.e., lignin. Cellulose, hemicellulose, and lignin have different chemical behaviors. This makes it difficult to process lignocellulose, which is a complex of these three components, and considerable chemical and mechanical energies are required for decomposition or separation of lignocellulose into the respective components.

A typical method for separating cellulose from lignocellulose is a pulping method. Specifically, a chemical (pulping agent) such as sodium sulfite or sodium hydroxide and an auxiliary agent such as anthraquinone are added to wood chips, and the wood chips are boiled and dissolved to take out wood fibers (cellulose fibers). Upon pulping, lignin and resin components fixing the wood fibers are separated as a black liquor of the treatment agent and incinerated. The cellulose fibers taken out by the pulping method have a natural cellulose I crystal structure, and are thus hardly dissolved in a solvent and have no thermoplasticity. In the related art, there is no technique for shape-forming such cellulose fibers, and as exemplified in cited Patent Documents 1 to 3, only molded articles in which cellulose fibers are partially derivatized and dispersed in a matrix of a synthetic polymer have been proposed.

Accordingly, another object of the present disclosure is to provide a technique for shape-forming a raw material such as a woody biomass containing lignocellulose by a simple process under conditions of a low energy load and a low environmental load, and to provide a method for producing a molded wood product without using a synthetic polymer.

### Solution to Problem

The inventors of the present disclosure have found that a molded product can be easily produced by dissolving a raw material such as a woody biomass containing cellulose or lignocellulose in an organic acid, and then adding water or an alkali to the solution to precipitate a solid content, followed by thermoforming of the solid content. Thus, the inventors have completed a molded wood product and a production method of the present disclosure.

That is, the molded wood product of the present disclosure contains cellulose as a main component. The molded wood product satisfies either or both of (1) and (2) described below.
(1) A flexural modulus determined by a flexural test in accordance with ISO 527-1 standard is 4000 MPa or more.
(2) A flexural strength determined by a flexural test in accordance with ISO 527-1 standard is 50 MPa or more.

In one aspect, the molded wood product may further contain lignin. The molded wood product containing lignin may have a specific gravity of 0.5 g/cm³ or more.

In another aspect, the molded wood product may have a specific gravity of 0.9 g/cm³ or more.

The molded wood product may exhibit an absorption peak in a region from 1715 to 1720 cm⁻¹ of an infrared absorption spectrum.

The molded wood product may further contain a fibrous substance. The fibrous substance may have a cellulose I crystal structure.

The molded wood product may contain lignin in an amount of 15 wt.% or more and 80 wt.% or less of a total lignin content.

The molded wood product may further contain hemicellulose and lignin. The total lignin content of the molded wood product may be 20 wt.% or more and 45 wt.% or less. Constituent proportions of polysaccharides determined by saccharide composition analysis of the molded wood product may satisfy the following:
glucan: 40 wt.% or more and 80 wt.% or less
xylan: 0.1 wt.% or more and 3.0 wt.% or less
arabinan: 0.2 wt.% or more and 3.0 wt.% or less
mannan: 1.0 wt.% or more and 5.0 wt.% or less

From another viewpoint, the present disclosure relates to a woody pellet used as a molding material of any of the above-described molded wood products. **In** one aspect, the woody pellet contains cellulose, hemicellulose, and lignin. The woody pellet exhibits an absorption peak in a region from 1715 to 1720 cm⁻¹ of an infrared absorption spectrum. The total lignin content of the woody pellet is 20 wt.% or more and 45 wt.% or less. Constituent proportions of polysaccharides determined by saccharide composition analysis of the woody pellet satisfy the following:
glucan: 40 wt.% or more and 80 wt.% or less
xylan: 0.1 wt.% or more and 3.0 wt.% or less
arabinan: 0.2 wt.% or more and 3.0 wt.% or less
mannan: 1.0 wt.% or more and 5.0 wt.% or less

**In** another aspect, the woody pellet contains cellulose, hemicellulose, and lignin. The cellulose has a cellulose I crystal structure. The total lignin content of the woody pellet is 10 wt.% or more and 45 wt.% or less. Constituent proportions of polysaccharides determined by saccharide composition analysis of the woody pellet satisfy the following:
glucan: 55 wt.% or more and 80 wt.% or less
xylan: 0.1 wt.% or more and 5.0 wt.% or less
arabinan: 0.2 wt.% or more and 1.0 wt.% or less
mannan: 1.0 wt.% or more and 3.0 wt.% or less

From another viewpoint, a method for producing the molded wood product described above includes:
(1) dissolving a cellulose-containing raw material in an organic acid to prepare a cellulose-containing solution;
(2) adding water or an alkali to the cellulose-containing solution to precipitate a solid content;
(3) recovering the solid content; and
(4) thermoforming the recovered solid content. The main component of the solid content is cellulose.

In the precipitation of the solid content, the pH of the cellulose-containing solution may be adjusted to 3 or higher.

The recovered solid content may be subjected to thermoforming under conditions of a temperature of 60°C or higher and 210°C or lower and a pressure of 100 Pa or higher and 400 Pa or lower. The production method may further include subjecting the recovered solid content to deliquoring before thermoforming. The production method may further include pulverizing the cellulose-containing raw material to prepare a cellulose-containing powder before dissolving the cellulose-containing raw material in the organic acid.

### Advantageous Effects of Invention

In the molded wood product of the present disclosure, a higher-order structure of cellulose derived from a cellulose-containing raw material, in particular, a woody biomass is regenerated. The molded wood product can have improved physical properties as compared with wood. In addition, the molded wood product can have a strength and an elastic modulus equivalent to those of a general-purpose resin.

Lignocellulose contained in the woody biomass forms a strong higher-order structure in which cellulose, hemicellulose, and lignin are intricately intertwined. Specifically, in lignocellulose, cellulose, which is a linear polymer, forms a crystal structure by intramolecular and intermolecular hydrogen bonds and forms strong microfibrils, which are intertwined with hemicellulose such as xylan or glucomannan, and further, lignin, which is an irregular aromatic polymer, is filled in voids of matrixes of these polysaccharides, thereby forming a strong composite. Therefore, shape-forming of the woody biomass itself is difficult.

According to the production method of the present disclosure, the higher-order structure derived from cellulose, hemicellulose, and the like as a raw material is dissolved in an organic acid to come loose, and then water molecules are removed from the precipitated solid content in thermoforming and deliquoring processes, whereby the higher-order structure derived from the raw material can be regenerated. According to the production method of the present disclosure, a molded wood product containing no synthetic polymer and having a low environmental load can be produced from a cellulose-containing raw material, further a woody biomass, by a simple process at a low energy load. This production method is socially useful.

### Brief Description of Drawings

FIG. 1 is a photograph illustrating a molded wood product (sheet) produced by a production method according to an embodiment of the present disclosure.
FIG. 2 is a photograph illustrating a molded wood product (sheet) produced by a production method according to another embodiment of the present disclosure.
FIG. 3A is an electron micrograph (magnification: 50 times) illustrating a surface state of the molded wood product of FIG. 1.
FIG. 3B is an electron micrograph (magnification: 1000 times) illustrating a surface state of the molded wood product of FIG. 1.
FIG. 4A is an electron micrograph (magnification: 50 times) illustrating a surface state of the molded wood product of FIG. 2.
FIG. 4B is an electron micrograph (magnification: 1000 times) illustrating a surface state of the molded wood product of FIG. 2.
FIG. 5 is a photograph illustrating a molded wood product (molded body) according to still another embodiment of the present disclosure.
FIG. 6 is a photograph illustrating a molded wood product of Example 12.
FIG. 7 is a photograph illustrating a molded wood product of Example 13.
FIG. 8 is a photograph illustrating a molded wood product of Example 14.
FIG. 9 is a photograph illustrating a molded body of Example 15.
FIG. 10 is a photograph illustrating a molded body of Example 16.
FIG. 11 is a photograph illustrating a molded body of Example 17.

### Description of Embodiments

Hereinafter, an example of a preferred embodiment will be specifically described. Each of the configurations, combinations thereof, and the like in each of the embodiments are an example, and various additions, omissions, substitutions, and other changes of the configurations may be made as appropriate without departing from the spirit of the present disclosure. The present disclosure is not limited by the embodiments and is limited only by the claims. Each aspect disclosed in the present specification can be combined with any other feature disclosed herein.

In the present specification, "from X to Y" indicating a range means "X or more and Y or less". Unless otherwise noted, all test temperatures are room temperature (20°C ± 5°C). **In** the present disclosure, wt.% means weight percent, and does not mean weight concentration (mass concentration).

### Molded wood product

The molded wood product according to an embodiment of the present disclosure can be produced by using a raw material containing cellulose as described below. The molded wood product according to an embodiment of the present disclosure is a concept including a molded article composed only of cellulose.

The molded wood product according to an embodiment of the present disclosure contains cellulose as an essential component. However, the molded wood product according to an embodiment of the present disclosure may contain lignin in addition to cellulose. The molded wood product may further contain hemicellulose and/or lignin in addition to cellulose. **In** a preferred embodiment, the molded wood product contains cellulose, hemicellulose, and lignin.

The molded wood product containing lignin is produced by, for example, using a woody biomass as at least a part of a cellulose-containing raw material. The woody biomass contains certain amounts of lignin and hemicellulose. **In** the molded article containing lignin, shrinkage during thermoforming is suppressed. Although details will be described below, it is considered that in a production process of the molded wood product, lignin interferes with a shrinkage action occurring when a hydrogen bond of cellulose is reconstructed to form a higher-order structure, and thus a molded article having a desired shape is produced. Meanwhile, in a case where only a cellulose-containing raw material containing no lignin is used, a molded article in which the shrinkage is suppressed is produced by adjusting precipitation conditions and molding conditions in the production process described below.

The molded wood product according to an embodiment of the present disclosure contains a component derived from the cellulose-containing raw material, i.e., cellulose as a main component. **In** the present disclosure, the "main component" means a component whose content is at least 40 wt.%. The content of the cellulose in the molded wood product may be 80 wt.% or more, 90 wt.% or more, or 100 wt.%.

The molded wood product according to a preferred embodiment may further contain lignin, and may further contain lignin and/or cellulose. The molded wood product of this embodiment can be produced by using a raw material containing lignocellulose having a higher-order structure composed of cellulose, hemicellulose, and lignin, for example, a woody biomass. In this case, the main components of the molded wood product according to an embodiment of the present disclosure may be cellulose, hemicellulose, and lignin, and these may be contained in the form of lignocellulose. The total content of cellulose, hemicellulose, and lignin (or the content in terms of lignocellulose) in the molded wood product may be 60 wt.% or more, 80 wt.% or more, 90 wt.% or more, or 100 wt.%.

### Mechanical properties of molded wood product

The molded wood product according to an embodiment of the present disclosure further has either or both of the following characteristics (1) and (2).
(1) A flexural modulus determined by a flexural test in accordance with ISO 527-1 standard is 4000 MPa or more.
(2) A flexural strength determined by a flexural test in accordance with ISO 527-1 standard is 50 MPa or more.

For example, in the case of general-purpose resins, an ABS resin has a flexural strength of 64 MPa and a flexural modulus of 2500 MPa, polycarbonate (PC) has a flexural strength of 85 MPa and a flexural modulus of 2300 MPa, and polyethylene terephthalate (PET) has a flexural strength of from 76 to 103 MPa and a flexural modulus of from 2800 to 4200 MPa (https://www.plastic-kakou.net/material/plastic.html). In the case of wood, paulownia has a flexural strength of 34.3 MPa and a flexural modulus of 4900 MPa, and cedar has a flexural strength of 63.7 MPa and a flexural modulus of 7350 MPa (https://www.toishi.info/sozai/woods/). These data indicate that the molded wood product according to an embodiment of the present disclosure, which satisfies the above-described condition (1) and/or condition (2), has mechanical properties equal to or higher than those of general-purpose resins, and further has properties comparable to those of wood.

The flexural modulus (Young's modulus) of the molded wood product according to an embodiment of molded wood product is 4000 MPa or more, and may be 4500 MPa or more, or 5000 MPa or more, and may be 8000 MPa or less, or 7000 MPa or less, depending on the application and the shape thereof. The flexural modulus in the present disclosure may be from 4000 to 8000 MPa, from 4000 to 7000 MPa, from 4500 to 8000 MPa, from 4500 to 7000 MPa, from 5000 to 8000 MPa, or from 5000 to 7000 MPa.

The flexural strength (maximum stress) of the molded wood product according to an embodiment of the present disclosure is 50 MPa or more, and may be 55 MPa or more, or 60 MPa or more, and may be 100 MPa or less, or 90 MPa or less, depending on the application and shape thereof. The flexural strength (maximum stress) of the molded wood product may be from 50 to 100 MPa, from 50 to 90 MPa, from 55 to 100 MPa, from 55 to 90 MPa, from 60 to 100 MPa, or from 60 to 90 MPa.

The maximum elongation of the molded wood product as determined in a flexural test may be 1.0 %GL or more or 1.5 %GL or more, and may be 5.0 %GL or less or 4.5 %GL or less. The maximum elongation of the molded wood product may be from 1.0 to 5.0 %GL, from 1.0 to 4.5 %GL, from 1.5 to 5.0 %GL, or from 1.5 to 4.5 %GL.

In the present disclosure, the flexural properties of the molded wood product are measured by a flexural test in accordance with ISO 527-1 standard. The flexural test involves using a test piece molded to have specified dimensions or a test piece machined by cutting or punching. The test piece is subjected to humidity conditioning for 12 hours in an environment of 25°C and 50 RH% before measurement. The measurement is performed by a three-point flexural test, and a bending speed is adjusted to 2 mm/min.

Tensile properties of the molded wood product can be appropriately set depending on the application and shape thereof. For example, the tensile modulus (Young's modulus) of the molded wood product may be 100 MPa or more or 200 MPa or more, and may be 3000 MPa or less. The tensile modulus (Young's modulus) of the molded wood product may be from 100 to 3000 MPa, or from 200 to 3000 MPa.

The tensile strength (maximum stress) of the molded wood product may be 4.0 MPa or more, 6.0 MPa or more, 10.0 MPa or more, or 20.0 MPa or more, and may be 80.0 MPa or less, or 70.0 MPa or less. The tensile strength (maximum stress) of the molded wood product may be from 4.0 to 80.0 MPa, from 4.0 to 70.0 MPa, from 6.0 to 80.0 MPa, from 6.0 to 70.0 Pa, from 10.0 to 80.0 MPa, from 10.0 to 70.0 MPa, from 20.0 to 80.0 Pa, or from 20.0 to 70.0 MPa.

The maximum elongation of the molded wood product as determined in the tensile test may be 1.0%GL or more or 1.5 %GL or more, and may be 5.0 %GL or less or 4.5 %GL or less. The maximum elongation may be from 1.0 to 5.0%GL, from 1.0 to 4.5%GL, from 1.5 to 5.0%GL, or from 1.5 to 4.5%GL.

In the present disclosure, the tensile properties of the molded wood product are measured by a tensile test in accordance with ISO 527-1 standard. The tensile test involves using a test piece machined by punching to have specified dimensions. The test piece is subjected to humidity conditioning for 12 hours in an environment of 25°C and 50 RH% before measurement. The measurement is performed at a tensile speed of 10 mm/min.

### Density of molded wood product

The molded wood product according to an embodiment of the present disclosure has a high specific gravity. That is, the molded wood product has a high density. The specific gravity of the molded wood product measured in accordance with JIS Z 8807 "Method for measuring density and specific gravity of solid" is preferably 0.5 g/cm³ or more, more preferably 0.6 g/cm³ or more, even more preferably 0.8 g/cm³ or more, and particularly preferably 0.9 g/cm³ or more. The specific gravity of the molded wood product is preferably less than 2.5 g/cm³, more preferably less than 2.0 g/cm³, and particularly preferably less than 1.5 g/cm³. The specific gravity of the molded wood product may be 0.5 g/cm³ or more and less than 2.5 g/cm³, 0.6 g/cm³ or more and less than 2.5 g/cm³, 0.8 g/cm³ or more and less than 2.5 g/cm³, 0.9 g/cm³ or more and less than 2.5 g/cm³, 0.9 g/cm³ or more and less than 2.0 g/cm³, or 0.9 g/cm³ or more and less than 1.5 g/cm³.

The density of the molded wood product can be adjusted by, for example, a pressure during thermoforming in the production process. A molded wood product having a high density can be produced through pressurization at high pressure. The mechanical strength tends to be improved by increasing the density of the molded wood product. To produce a molded wood product having a desired strength, a molding temperature, a molding time, and the like may be adjusted in addition to the pressure during thermoforming.

The density of the molded wood product may be adjusted to an appropriate value depending on the material of the molded wood product. For example, in a case where the molded wood product contains lignin as a constituent component, a relatively high strength can be achieved by formation of a higher-order structure. The density of the molded wood product containing lignin may be 0.5 g/cm³ or more and less than 2.5 g/cm³, 0.5 g/cm³ or more and less than 1.5 g/cm³, or 0.5 g/cm³ or more and less than 1.3 g/cm³. The molded wood product containing lignin can be provided with a smooth surface. The total lignin content of the molded wood product may be 15 wt.% or more and 80 wt.% or less. The total lignin content will be described below.

### Infrared absorption spectrum of molded wood product

The molded wood product according to an embodiment of the present disclosure may exhibit an absorption peak having a peak top in a range from 1715 to 1720 cm⁻¹ of an infrared absorption spectrum. Absorption at a wave number of from 1715 to 1720 cm⁻¹ is caused by C=O stretching vibration. Specifically, the absorption peak is caused by C=O stretching vibration of an aldehyde group (formyl group). In the present disclosure, the presence of the absorption peak at from 1715 to 1720 cm⁻¹ means that some or all of hydroxyl groups of cellulose contained in the molded wood product are formylated.

As described below, the molded wood product according to an embodiment of the present disclosure is produced by dissolving a cellulose-containing raw material in an organic acid, and then thermoforming a solid content precipitated by addition of water or an alkali. When the cellulose-containing raw material is dissolved in the organic acid, a formyl group is introduced into some or all of hydroxyl groups of cellulose. The formyl group is saponified in a precipitation step by addition of an alkali and returns to a hydroxyl group. The hydroxyl group contributes to generation of a hydrogen bond. A molded article having a high strength can be produced by reconstruction of the higher-order structure with the hydrogen bond. Meanwhile, in a case where all formyl groups are completely saponified, particularly in a molded wood product having a low lignin content, reconstruction of the higher-order structure with the hydrogen bond may cause deformation and shrinkage. Thus, in a case where a cellulose-containing raw material having a low lignin content is used, the raw material preferably contains at least partially formylated cellulose. A molded wood product containing at least partially formylated cellulose can be produced by adding water instead of an alkali in the precipitation step.

The molded wood product according to an embodiment of the present disclosure may further contain a fibrous substance. A molded wood product having excellent strength is produced by incorporating the fibrous substance. The presence of the fibrous substance in the molded wood product can be confirmed by observation with a scanning electron microscope.

The fibrous substance in the molded wood product may be derived from the woody biomass as a raw material. For example, the fibrous substance may be cellulose fibers which have not been broken by grinding or the like in the production process. Alternatively, the fibrous substance may be a dissolution residue obtained in a dissolution step. According to the present disclosure, such a fibrous substance can be embedded in lignin and hemicellulose to yield a homogeneous molded wood product. **In** particular, in a case of a molded wood product having a high lignin content, the fibrous substance is embedded in a matrix of lignin, and thus a molded wood product having a smoother surface can be produced.

**In** the present disclosure, the fibrous substance may have a cellulose I crystal structure. The presence of the cellulose I crystal structure can be confirmed by X-ray diffractometry. **In** an example method, a sample prepared by freeze-drying the molded wood product is analyzed with an X-ray diffractometer (for example, "SmartLab" available from Rigaku Corporation). Specifically, the analysis can be performed by X-ray diffractometry using a non-reflective silicon plate. Cellulose I crystals having a parallel-chain structure are known to exhibit high-intensity diffractions at 2θ of around 22.5°, and around 16.7° and around 14.8° by peak separation. Accordingly, in an X-ray diffraction chart obtained by analysis of a sample collected from the molded wood product, the presence or absence of a cellulose I crystal structure can be determined by confirming the presence or absence of high-intensity diffraction peaks at 2θ of around 22.5°, around 16.7°, and around 14.8°.

### Total lignin content of molded wood product

As described above, the molded wood product according to an embodiment of the present disclosure preferably contains lignin. Incorporation of lignin can provide the molded wood product with a smooth surface even when the molded wood product contains a fibrous substance having a cellulose I crystal structure. **In** addition, incorporation of a predetermined amount of lignin suppresses cracking, breakage, or the like during thermoforming. From this viewpoint, the total lignin content of the molded wood product may be 2 wt.% or more, 5 wt.% or more, 7 wt.% or more, 10 wt.% or more, 15 wt.% or more, 20 wt.% or more, or 21 wt.% or more, and may be 90 wt.% or less, 89 wt.% or less, 85 wt.% or less, 80 wt.% or less, 70 wt.% or less, 50 wt.% or less, 48 wt.% or less, 45 wt.% or less, or 44 wt.% or less.

For example, the total lignin content of the molded wood product may be in a range from 2 to 90 wt.%, from 2 to 89 wt.%, from 2 to 85 wt.%, from 2 to 80 wt.%, from 2 to 50 wt.%, from 2 to 48 wt.%, from 2 to 45 wt.%, from 2 to 44 wt.%, from 5 to 90 wt.%, from 5 to 89 wt.%, from 5 to 85 wt.%, from 5 to 80 wt.%, from 5 to 50 wt.%, from 5 to 48 wt.%, from 5 to 45 wt.%, from 5 to 44 wt.%, from 7 to 90 wt.%, from 7 to 89 wt.%, from 7 to 85 wt.%, from 7 to 80 wt.%, from 7 to 50 wt.%, from 7 to 48 wt.%, from 7 to 45 wt.%, from 7 to 44 wt.%, from 10 to 90 wt.%, from 10 to 89 wt.%, from 10 to 85 wt.%, from 10 to 80 wt.%, from 10 to 50 wt.%, from 10 to 48 wt.%, from 10 to 45 wt.%, from 10 to 44 wt.%, from 15 to 90 wt.%, from 15 to 89 wt.%, from 15 to 85 wt.%, from 15 to 80 wt.%, from 15 to 50 wt.%, from 15 to 48 wt.%, from 15 to 45 wt.%, from 15 to 44 wt.%, from 20 to 90 wt.%, from 20 to 89 wt.%, from 20 to 85 wt.%, from 20 to 80 wt.%, from 20 to 50 wt.%, from 20 to 48 wt.%, from 20 to 45 wt.%, from 20 to 44 wt.%, 21 to 90 wt.%, from 21 to 89 wt.%, from 21 to 85 wt.%, from 21 to 80 wt.%, from 21 to 50 wt.%, from 21 to 48 wt.%, from 21 to 45 wt.%, or from 21 to 44 wt.%. Preferably, the total lignin content of the molded wood product may be any of 2 wt.% or more and 90 wt.% or less, 5 wt.% or more and 89 wt.% or less, 7 wt.% or more and 85 wt.% or less, 10 wt.% or more and 85 wt.% or less, 15 wt.% or more and 80 wt.% or less, 10 wt.% or more and 50 wt.% or less, 15 wt.% or more and 48 wt.% or less, 20 wt.% or more and 45 wt.% or less, and 21 wt.% or more and 44 wt.% or less.

The total lignin content of the molded wood product can be adjusted by selecting the cellulose-containing raw material, in particular the woody biomass. For example, a desired total lignin content can be achieved by selecting wood as the woody biomass, i.e., the cellulose-containing raw material, and adjusting a tree species and the blended amount thereof. An increase in total lignin content can provide the molded wood product with high hydrophobicity and a large contact angle. In addition, the biodegradation rate of the molded wood product can be controlled by adjusting the total lignin content. A molded wood product having a high total lignin content tends to have a low biodegradation rate, whereas a molded wood product having a low total lignin content tends to have a high biodegradation rate. However, lignin is also a wood component, and thus is eventually biodegraded in the same manner as the woody biomass. The molded wood product according to an embodiment of the present disclosure is formed by reconstruction of hydrogen bonds of cellulose. Accordingly, when the molded wood product is kept in a wet state for a long period of time, the hydrogen bonds are relaxed and the molded wood product is likely to be acted on by a biodegradable enzyme or the like. For example, in a case where the molded wood product according to an embodiment of the present disclosure is used as an interior material of a passenger vehicle, it is expected that the molded wood product can be easily biodegraded by processing it into shredder dust and keeping it in a wet state after scrapping of the vehicle.

In the present disclosure, the total lignin content of the molded wood product is determined as a total amount of acid-soluble lignin and acid-insoluble lignin. A method for determining the total lignin content will be described below in Examples.

### Preferred components of molded wood product

The molded wood product according to an embodiment of the present disclosure may further contain hemicellulose together with lignin. In a case where a general woody biomass is used as the cellulose-containing raw material, the molded wood product may contain lignin and hemicellulose derived from the woody biomass.

In a preferred embodiment, the molded wood product contains cellulose, hemicellulose, and lignin. In a case where the total lignin content is 20 wt.% or more and 45 wt.% or less, the constituent proportions of polysaccharides determined by saccharide composition analysis may be as follows.
Glucan: 40 wt.% or more and 80 wt.% or less
Xylan: 0.1 wt.% or more and 3.0 wt.% or less
Arabinan: 0.2 wt.% or more and 3.0 wt.% or less
Mannan: 1.0 wt.% or more and 5.0 wt.% or less

The saccharide constituent proportions of the molded wood product can be controlled to fall within desired ranges by adjusting the type and blended proportion of the woody biomass in the cellulose-containing raw material. For example, the above-described saccharide constituent proportions can be achieved by mixing an appropriate amount of the woody biomass with waste paper pulp substantially composed of cellulose to prepare a raw material. In addition, the saccharide constituent proportions of the molded wood product may be adjusted by changing conditions of the production process (for example, precipitation step).

The molded wood product may contain an organic acid as long as the effects of the present disclosure are not inhibited. Examples of the organic acid include an α-keto acid and a carboxylic acid having a formyl group. The organic acid may be one or two or more selected from the group consisting of formic acid, glyoxylic acid, and pyruvic acid.

The amount of the organic acid contained in the molded wood product is not particularly limited, but for example, from the viewpoint that mechanical properties and durability are not inhibited, the amount of the organic acid may be 10.0 wt.% or less, 8.0 wt.% or less, 6.0 wt.% or less, 4.0 wt.% or less, 1.0 wt.% or less, 0.1 wt.% or less, or 100 ppm or less. The lower limit thereof may be 0.

The shape and the like of the molded wood product according to an embodiment of the present disclosure are not particularly limited. For example, the molded wood product may have a thickness of 1 mm or more, 5 mm or more, or 10 mm or more. The molded wood product can be provided with physical properties similar to those of the cellulose-containing raw material as a raw material, for example, the woody biomass. Furthermore, the molded wood product can be provided with physical properties superior to those of the raw material. The molded wood product according to an embodiment of the present disclosure can be applied to fields including medical care, clothes, and housing equipment, as films, fibers, wallpaper, and the like required to have functions such as antibacterial properties, ultraviolet absorption properties, and metal adsorption ability.

### Woody pellet

The woody pellet according to an embodiment of the present disclosure can be used as a molding material for the above-described molded wood product. For example, the molded wood product according to an embodiment of the present disclosure can be produced by using the woody pellet as a material and utilizing a known technique for thermoforming of a thermosetting resin or a pulp molding technique.

In the production process for the molded wood product described below, water or an alkali may be added to a solution prepared by dissolving a cellulose-containing raw material in an organic acid to cause precipitation, and the recovered solid content may be used as the woody pellet according to an embodiment of the present disclosure. The woody pellet may contain water. The amount of water contained in the woody pellet is not particularly limited, but the solid content concentration of the woody pellet may be 1 wt.% or more, 5 wt.% or more, or 10 wt.% or more, and may be 80 wt.% or less, 60 wt.% or less, or 50 wt.% or less, from the viewpoint that the molded wood product according to an embodiment of the present disclosure is easily produced. The solid content concentration of the woody pellet may be from 1 to 80 wt.%, from 5 to 60 wt.%, or from 10 to 50 wt.%.

The woody pellet may be packed in a moisture-proof package. The moisture-proof package may have a water vapor permeability of 50 cc/m²·day or less, or 20 cc/m²·day or less. When the woody pellet is packed in the moisture-proof package, the woody pellet can be stored for a required period of time, and can be subjected to thermoforming described below after being stored for the required period of time. As long as the woody pellet has the above-mentioned water content, the woody pellet may also be packed in a compressed state. For example, the woody pellet may be compressed to a volume of 1/5 to 1/10 and packed in the moisture-proof package using an apparatus for compressing and packing waste or the like. Packing in this manner improves the storage efficiency and transport efficiency of the woody pellet. The packed woody pellet can be appropriately taken out and used by opening the moisture-proof package.

From the viewpoint of storage stability, the pH of water contained in the woody pellet is preferably 6 or lower, and is preferably 2 or higher, more preferably 3 or higher. The water contained in the woody pellet may have a pH of from 2 to 6, or a pH of from 3 to 6. The pH can be adjusted by washing the solid content recovered by precipitation.

### Preferred embodiment 1 of woody pellet

In a preferred embodiment, the woody pellet exhibits an absorption peak in a wave number region from 1715 to 1720 cm⁻¹ of an infrared absorption spectrum. The woody pellet of the embodiment 1 can be produced, for example, by precipitating a solid content from a solution prepared by dissolving a cellulose-containing raw material in an organic acid, under a condition that saponification is completely prevented, in the production process for the molded wood product.

The woody pellet of the embodiment 1 contains cellulose, hemicellulose, and lignin, and has a total lignin content of 20 wt.% or more and 45 wt.% or less. When the total lignin content is within the above range, and saponification is completely prevented, excessive shrinkage is suppressed during reconstruction of hydrogen bonds of hydroxyl groups. From this viewpoint, the total lignin content of the woody pellet of the embodiment 1 may be 15 mass% or more and 48 mass% or less.

In the woody pellet of the embodiment 1, when the total lignin content is 20 wt.% or more and 45 wt.% or less, the constituent proportions of polysaccharides determined by saccharide composition analysis may satisfy the following.
Glucan: 40 wt.% or more and 80 wt.% or less
Xylan: 0.1 wt.% or more and 3.0 wt.% or less
Arabinan: 0.2 wt.% or more and 3.0 wt.% or less
Mannan: 1.0 wt.% or more and 5.0 wt.% or less

Glucan is a polysaccharide mainly derived from cellulose, and xylan, arabinan, and mannan are polysaccharides derived from hemicellulose. When the constituent proportion of glucan derived from cellulose is within the above range, the resultant molded wood product has improved strength. Meanwhile, when a hemicellulose-derived polysaccharide is contained in an amount exceeding the above range, the molded wood product may be colored during thermoforming. Furthermore, when the content of mannan, which is a typical constituent saccharide of hemicellulose, is below the above range, the content of cellulose is relatively high, and the molded wood product may deform or shrink during thermoforming.

### Preferred embodiment 2 of woody pellet

In another preferred embodiment, the woody pellet contains cellulose having a cellulose I crystal structure. The cellulose may be contained as a fibrous substance. A molded wood product having excellent strength can be produced by using the woody pellet of the embodiment 2 containing cellulose having a cellulose I crystal structure.

The woody pellet of the embodiment 2 contains cellulose, hemicellulose, and lignin, and has a total lignin content of 10 wt.% or more and 45 wt.% or less. **In** the woody pellet, the constituent proportions of polysaccharides determined by saccharide composition analysis may satisfy the following.
Glucan: 55 wt.% or more and 80 wt.% or less
Xylan: 0.1 wt.% or more and 5.0 wt.% or less
Arabinan: 0.2 wt.% or more and 1.0 wt.% or less
Mannan: 1.0 wt.% or more and 3.0 wt.% or less

By using the woody pellet in which the total lignin content is in the above range, and the constituent proportions of glucan, xylan, arabinan, and mannan are in the above ranges, shrinkage during thermoforming is suppressed, and a less colored molded wood product having excellent strength can be produced.

### Method for producing molded wood product

A method for producing a molded wood product according to an embodiment of the present disclosure includes: (1) dissolving a cellulose-containing raw material in an organic acid to prepare a cellulose-containing solution; (2) adding water or an alkali to the cellulose-containing solution to precipitate a solid content; (3) recovering the solid content; and (4) thermoforming the recovered solid content. The main component of the solid content is cellulose.

The cellulose-containing raw material may be a raw material substantially composed of cellulose (for example, pulp) or a raw material containing cellulose as lignocellulose. The raw material is preferably a woody biomass.

In a pulp having a cellulose I crystal structure like the case of natural cellulose, the cellulose forms a strong higher-order structure by a hydrogen bond, thereby inhibiting a shape-forming property. The main component of the woody biomass is lignocellulose having a higher-order structure composed of cellulose, hemicellulose, and lignin. It has been considered that lignocellulose is not dissolved in a solvent such as water or an organic solvent under mild conditions because of the higher-order structure of lignocellulose. The inventors of the present disclosure have found that when lignocellulose, which is the main component of the woody biomass, is formylated in an organic acid such as formic acid, intramolecular and intermolecular hydrogen bonds due to cellulose are inhibited, and hemicellulose and lignin are solubilized, whereby lignocellulose can be dissolved in the organic acid under mild conditions. In addition, the inventors have found that this action is also effective for a cellulose-containing raw material (for example, pulp) containing a cellulose I crystal structure.

That is, in the production method according to an embodiment of the present disclosure, the hydrogen bonds between cellulose molecules and lignin molecules are eliminated by esterifying (for example, formylating) the cellulose-containing raw material in the organic acid. As a result, the cellulose-containing raw material is dissolved in the organic acid to prepare a cellulose-containing solution. In a case where the cellulose-containing raw material is lignocellulose containing lignin, lignin is also dissolved in the organic acid. In a case where the cellulose-containing raw material contains hemicellulose, hemicellulose is also dissolved in the organic acid. In other words, in the present disclosure, the cellulose-containing solution may further contain lignin and hemicellulose in addition to cellulose. The main component of the molded wood product according to an embodiment of the present disclosure is cellulose.

Furthermore, the inventors of the present disclosure have found that a solid content containing cellulose is precipitated by adding water or an alkali to the cellulose-containing solution. The inventors have also found that a liquid component (water or the like) is lost from the solid content by deliquoring and thermoforming, whereby a higher-order structure due to hydrogen bonds is reconstructed to regenerate the original structure of cellulose. In addition, the inventors have found that physical properties (specific gravity, strength, and the like) of a molded article produced by thermoforming the recovered solid content are more improved than those of the used cellulose-containing raw material (for example, woody biomass). Conceivably, the mechanism thereof is due to the fact that hydroxyl groups of cellulose are regenerated by saponification (deformylation) to form intermolecular or intramolecular hydrogen bonds of cellulose, and preferably, hemicellulose and lignin are insolubilized to form a higher-order structure derived from a natural product. With this mechanism, the production method according to an embodiment of the present disclosure can produce a molded wood product having excellent moldability and characteristics comparable to those of a general-purpose resin by using a cellulose-containing raw material, preferably lignocellulose, particularly woody biomass, as a raw material without using a petroleum-based chemical having a high environmental load.

Hereinafter, steps of the production method will be described in detail.

### (1) Step of dissolving cellulose-containing raw material in organic acid to prepare cellulose-containing solution

In this step, a cellulose-containing raw material is dissolved in an organic acid to prepare a cellulose-containing solution (hereinafter may be referred to simply as "solution"). The cellulose-containing raw material only needs to contain cellulose, and may be a raw material containing cellulose as lignocellulose. Examples of the raw material containing cellulose, predominantly in the form of lignocellulose, include a woody biomass.

For example, the cellulose-containing raw material used in the present disclosure may be low-purity cellulose, high-purity cellulose, or dissolving pulp having high α-cellulose purity. In addition, waste paper pulp whose α-cellulose purity is not so high can also be used as the cellulose-containing raw material in the present disclosure. A preferred cellulose-containing raw material further contains lignin in addition to cellulose. Such a cellulose-containing raw material is preferably mechanical pulp, and is more preferably a woody biomass such as wood chip.

One of these cellulose-containing raw materials may be used alone or two or more thereof may be used in combination. For example, the woody biomass and waste paper pulp may be used in combination. Particularly preferably, the cellulose-containing raw material contains a lignin-containing woody biomass.

### Woody biomass

Biomass usually refers to a "renewable organic resource derived from a living organism (excluding a fossil fuel)". The woody biomass used in the production method according to an embodiment of the present disclosure is not particularly limited, and is preferably a material derived from wood such as needle-leaved tree or broad-leaved tree containing a large amount of lignocellulose.

Lignocellulose is a mixture of natural polymers containing mainly cellulose, hemicellulose, and lignin. Although the contents of cellulose, hemicellulose, and lignin vary depending on the type of the woody biomass selected, the composition thereof is not particularly limited in the production method according to an embodiment of the present disclosure. Two or more types of lignocellulose-containing woody biomasses having different compositions can be used as cellulose-containing raw materials. An herbaceous biomass such as bagasse, rice straw, or wheat bran may be used in combination as long as the effects of the present disclosure are achieved. The woody biomass or the herbaceous biomass may be used after being pulverized as necessary.

### Pulp

Pulp refers to a material prepared by mechanically or chemically treating a plant raw material such as wood for extraction of cellulose. Examples of the pulp include mechanical pulp produced by mechanically treating wood as is or under heat treatment. Mechanical pulp is classified into, for example, groundwood pulp (GP), refiner groundwood pulp (RGP), thermomechanical pulp (TMP), and chemical thermomechanical pulp (CTMP) according to the production method. Among these, groundwood pulp is preferred. Alternatively, chemical pulp prepared by chemically treating wood may be used as the cellulose-containing raw material according to an embodiment of the present disclosure. Examples of the chemical pulp include rayon pulp and dissolving pulp. Pulp may be disintegrated before use.

### Dissolution

In the present specification, "dissolved" refers to a state where the shape of the cellulose-containing raw material in the organic acid cannot be visually recognized. Even when fibrous substances derived from lignocellulose are determined in the solution by microscopic observation or the like, a case where the cellulose-containing raw material loses its shape is defined as "dissolved". A liquid in such a "dissolved" state is defined as a "solution" in the present disclosure. It is preferable that the cellulose-containing raw material is homogeneously dissolved in the organic acid. However, the cellulose-containing raw material may be partially dissolved in the organic acid. In the case of partial dissolution, the cellulose-containing solution can be prepared by removing insoluble matter by filtration or the like.

### Organic acid

The type of the organic acid is not particularly limited as long as the effects of the present disclosure are achieved. The organic acid is typically a carboxylic acid. The carboxylic acid may be an aliphatic carboxylic acid or an aromatic carboxylic acid. From the viewpoint of excellent solubility of wood powder, an α-keto acid and a carboxylic acid having a formyl group are preferred, and an organic acid selected from the group consisting of formic acid, glyoxylic acid, and pyruvic acid is particularly preferred. Formic acid, which can be produced using wood gas (a mixed gas of carbon dioxide and hydrogen) as a raw material, is particularly preferred.

The amount of the organic acid mixed with the cellulose-containing raw material is appropriately selected depending on the type and shape of the cellulose-containing raw material, the type of the organic acid, and the like. From the viewpoint of improving a dissolution efficiency, the amount of the organic acid is preferably 4 parts by weight or more, and more preferably 9 parts by weight or more, relative to 1 part by weight of the cellulose-containing raw material. From the viewpoint of improving a production efficiency, the amount of the organic acid is preferably 200 parts by weight or less, more preferably 100 parts by weight or less, and even more preferably 49 parts by weight or less, relative to 1 part by weight of the cellulose-containing raw material. The amount of the organic acid relative to 1 part by weight of the cellulose-containing raw material may be from 4 to 200 parts by weight, from 4 to 100 parts by weight, from 4 to 49 parts by weight, from 9 to 200 parts by weight, from 9 to 100 parts by weight, or from 9 to 49 parts by weight. As long as the effects of the present disclosure are achieved, the organic acid may be added as is to the cellulose-containing raw material, or may be added in the form of a solution having a desired concentration to the cellulose-containing raw material.

As long as the cellulose-containing solution is obtained, the dissolution conditions are not particularly limited, and are appropriately selected depending on the type and shape of the cellulose-containing raw material, the type of the organic acid, and the like. From the viewpoint of high dissolution efficiency, the dissolution temperature is preferably 20°C or higher, and more preferably 30°C or higher. From the viewpoint of energy reduction, the dissolution temperature is preferably 100°C or lower.

From the viewpoint of promoting the dissolution, a stirring treatment may be performed, or a stirring treatment accompanied by pulverization may be performed. The stirring treatment accompanied by pulverization in the organic acid makes it possible to dissolve the cellulose-containing raw material under milder conditions. In other words, the production method according to an embodiment of the present disclosure may include a step of stirring the cellulose-containing raw material with pulverization in the organic acid for dissolution of the raw material. Examples of the apparatus for the stirring treatment accompanied by pulverization include a bead mill, a colloid mill, a disc refiner, and a conical refiner.

### Pressure adjustment

The production method according to an embodiment of the present disclosure may further include a step of increasing or reducing pressure using a pressure adjustment means before mixing of the cellulose-containing raw material and the organic acid and/or after mixing of the cellulose-containing raw material and the organic acid. It is presumed that, in this pressure adjustment, a variation in pressure applied to the cellulose-containing raw material relaxes the strong higher-order structure of cellulose, in particular lignocellulose, and remarkably improves the solubility of the raw material in the organic acid. This pressure adjustment enables dissolution at a relatively low temperature, and reduces energy required for heating and/or temperature keeping during the dissolution. From the viewpoint that the organic acid is efficiently introduced into the structure of the cellulose-containing raw material by the pressure variation, it is preferable to increase or reduce pressure after addition of the organic acid to the cellulose-containing raw material.

In a case where the pressure is reduced, the pressure is preferably reduced in a range of 1.0 kPa or higher and 10.0 kPa (absolute pressure). In a case where the pressure is increased, the pressure is preferably increased in a range of 200 kPa or higher and 1000 kPa or lower (gauge pressure). In the present specification, the absolute pressure is used when the pressure is lower than the atmospheric pressure by a pressure reduction treatment, and the gauge pressure based on the atmospheric pressure is used when the pressure is higher than the atmospheric pressure by a pressure increase treatment.

The pressure adjusting means used in increasing or reducing pressure is not particularly limited. The pressure is adjusted to the above-described range by a known means such as an aspirator, an ejector, a compressor, or a mechanical pump.

### Cellulose-containing solution

The solid content concentration of the cellulose-containing solution prepared by dissolving the cellulose-containing raw material in the organic acid is preferably 0.5 (w/v)% or more, more preferably 1.0 (w/v)% or more, and even more preferably 1.5 (w/v)% or more. From the viewpoint of ease of production, the concentration of the solution is preferably 20 (w/v)% or less, more preferably 10 (w/v)% or less, and even more preferably 8.0 (w/v)% or less. The solid content concentration of the cellulose-containing solution may be from 0.5 to 20 (w/v)%, from 0.5 to 10 (w/v)%, from 0.5 to 8.0 (w/v)%, from 1.0 to 20 (w/v)%, from 1.0 to 10 (w/v)%, from 1.0 to 8.0 (w/v)%, from 1.5 to 20 (w/v)%, from 1.5 to 10 (w/v)%, or from 1.5 to 8.0 (w/v)%. The cellulose-containing solution may further contain a known additive such as a dye, as long as the effects of the present disclosure are not inhibited.

### (2) Step of adding water or alkali to cellulose-containing solution to precipitate solid content

In this step, water or an alkali is added to the cellulose-containing solution prepared by dissolution of the cellulose-containing raw material, to regenerate solubilized cellulose, preferably lignocellulose, whereby an insolubilized solid content is precipitated. The main component of the solid content is cellulose. From the viewpoint of improving the yield in a step of recovering the solid content described below, the cellulose-containing solution may be concentrated before this step. A known concentration method such as evaporation concentration or concentration under reduced pressure can be appropriately used.

In this step, a part or all of esterified cellulose is de-esterified by adding water or an alkali to the cellulose-containing solution, and is insolubilized by hydrogen bonds between the regenerated hydroxyl groups. In a case where lignin and hemicellulose are present in the cellulose-containing solution, the de-esterified cellulose precipitates in a micro-dispersed state in a matrix of lignin and hemicellulose. In a case where formic acid is used in the preceding step, deformylation of cellulose occurs in this step.

Addition of an alkali to the cellulose-containing solution promotes deesterification of the esterified cellulose. In other words, the esterified cellulose is saponified (hydrolyzed) by alkali addition.

The method for precipitating a solid content is not particularly limited as long as the effects of the present disclosure are achieved. For example, the solid content may be precipitated by a hydration-mixing treatment, an alkali treatment, or a dialysis treatment. Two or more treatments selected from the group consisting of the hydration-mixing treatment, the alkali treatment, and the dialysis treatment can be performed in combination.

### Hydration-mixing treatment

In the present disclosure, the "hydration-mixing treatment" means that water (for example, distilled water) is added to and mixed with the cellulose-containing solution to precipitate a solid content. In the course of precipitation, the esterified cellulose may be partially hydrolyzed (saponified).

The amount of water to be added to the cellulose-containing solution is appropriately determined depending on the solid content concentration of the solution. The amount of water to be added may be adjusted in such a manner that the cellulose-containing solution has a pH of 3 or higher, preferably a pH of 5 or higher, and more preferably a pH of 6 or higher. For example, the amount by volume of water used in the hydration-mixing treatment may be 100 times or more or 200 times or more, and may be 1000 times or less or 800 times or less that of the cellulose-containing solution. The temperature of the hydration-mixing treatment is not particularly limited, but is usually from 10 to 50°C, and may be normal temperature (20°C ± 5°C). To promote the reaction, stirring and mixing may be performed while increasing or keeping the temperature.

### Alkali treatment

In the present disclosure, the "alkali treatment" means that an alkali is added to the cellulose-containing solution to cause a hydrolysis (saponification) reaction. The physical properties of the molded wood product can be adjusted by promoting saponification by the alkali treatment. In this step, it is only required that a solid content containing cellulose is precipitated, and an intentional saponification treatment is not essential as long as the effects of the present disclosure are achieved.

The alkali used in the alkali treatment is not particularly limited, and an alkali metal hydroxide, an alkaline earth metal hydroxide, a quaternary ammonium hydroxide, or ammonia can be appropriately selected. An alkali metal hydroxide is preferred, and sodium hydroxide is suitably used. The alkali may be dissolved in a solvent such as water to prepare an alkali solution having a desired concentration, and the alkali solution may be added to the cellulose-containing solution.

The temperature of the alkali treatment is not particularly limited as long as the effects of the present disclosure are achieved. From the viewpoint of promoting the hydrolysis reaction, the temperature is preferably 10°C or higher, and more preferably 20°C or higher. From the viewpoint of suppressing coloration, the temperature of the alkali treatment is preferably 80°C or lower and more preferably 60°C or lower. To control the temperature within the above range, the alkali treatment may be performed while cooling the cellulose-containing solution.

The pH of the solution after the treatment is not particularly limited as long as the precipitated solid content can be recovered. For example, the solution after addition of water or the alkali may have a pH of 2.0 or higher, a pH of 2.5 or higher, or a pH of 3.0 or higher. From the viewpoint of promoting precipitation of the solid content, the pH is preferably 6.0 or higher, and the pH is more preferably 7.0 or higher. When the pH exceeds 11, a reaction with an ester group of the esterified cellulose may occur to excessively form an alkali salt. From this viewpoint, the pH is preferably less than 11.0, and the pH is more preferably 10.5 or less.

### Dialysis treatment

One variation of this step is a dialysis treatment. The "dialysis treatment" means that the cellulose-containing solution is brought into contact with a solvent through a semipermeable membrane (dialysis membrane) to precipitate a solid content. Specifically, the cellulose-containing solution is placed inside a semipermeable membrane and brought into contact with a solvent (for example, distilled water) outside the semipermeable membrane. Due to a concentration gradient between the inside and the outside of the semipermeable membrane, distilled water permeates into the inside of the semipermeable membrane, whereby hydrolysis reaction proceeds to regenerate hydroxyl groups in cellulose, and intramolecular or intermolecular hydrogen bonds are formed to precipitate a solid content. In a case where lignin and hemicellulose are present in the cellulose-containing solution, hemicellulose and lignin are insolubilized together with cellulose to generate a solid content containing a higher-order structure similar to that of lignocellulose. To promote the hydrolysis reaction, the solvent may be replaced at predetermined time intervals.

In the dialysis treatment, the amount of the solvent to be used relative to the cellulose-containing solution is appropriately determined depending on the solid content concentration of the solution. For example, the amount by volume of the solvent used in the dialysis treatment may be 100 times or more or 200 times or more, and may be 1000 times or less or 800 times or less that of the cellulose-containing solution. The temperature of the dialysis treatment is not particularly limited, but is usually from 10 to 50°C, and may be normal temperature (20°C ± 5°C). To promote the reaction, the dialysis treatment can be carried out while increasing or keeping the temperature.

The material of the semipermeable membrane to be used in the dialysis treatment is not particularly limited as long as the effects of the present disclosure are achieved, and the membrane may be a regenerated cellulose membrane or a synthetic polymer membrane. Examples of the synthetic polymer membrane include an ethylene-vinyl alcohol copolymer membrane, an acrylonitrile-sodium methacrylic sulfonate copolymer membrane, and a polycarbonate-polyethylene glycol copolymer membrane. From the viewpoint of improving the yield, the molecular weight cut off of the semipermeable membrane is preferably from 1000 to 5000, and more preferably from 1000 to 3500.

### (3) Step of recovering solid content

In this step, solid-liquid separation is performed to recover a solid content precipitated by the addition of water or an alkali.

The method for separating and recovering the solid content is not particularly limited, and suction filtration, centrifugation, or the like can be appropriately utilized. In a case of filtration, the filter material is not particularly limited, and only needs to be a filter material capable of filtering out a solid content. For example, filter paper corresponding to type 2 specified in JIS P3801 "Filter paper (for chemical analysis)" can be used as the filter material. As the filter paper of type 2, No. 131 available from ADVANTEC is exemplified. In a case of centrifugation, a swing rotor can be used to precipitate and recover the solid content under conditions of 4000 G for about 10 minutes. Alternatively, a general-purpose solid-liquid separator may be used. Examples of the solid-liquid separator include a screw press, a roller press, a rotary drum screen, a belt screen, a vibration screen, and a multi-plate vibration filter.

The recovered solid content mainly contains cellulose. The solid content may contain at least partially esterified (for example, formylated) cellulose. In a case where lignocellulose or a woody biomass is used as the cellulose-containing raw material, the recovered solid content may contain hemicellulose and lignin together with cellulose (or esterified cellulose). The solid content may contain at least partially esterified hemicellulose and at least partially esterified lignin.

The recovered solid content may contain an organic acid-derived component, an alkali-derived component, or the like in some cases. Thus, the solid content may be washed after the solid-liquid separation. Distilled water can be used for washing. After washing, the solid content is preferably subjected to a dehydration treatment using a known means. For example, a pool washer, a diffuser washer, a twin roll press machine, or the like may be used for the dehydration treatment of the solid content. In a case where water is added to the cellulose-containing solution to precipitate the solid content and the pH of the solution is adjusted to generally neutral or desired weakly acidic pH in the previous step, the washing treatment may be omitted. That is, only the dehydration treatment may be performed without performing the washing treatment. Also in this dehydration treatment, a known means can be used. It is also possible to utilize an apparatus which performs solid-liquid separation, washing, and deliquoring treatments at one time. Examples of such an apparatus include an extractor decker, a valveless filter, a suction filter, a disc extract, a disc valveless filter, and a disc thickener.

The solid content recovered in this step may be a partially lumpy solid substance. The solid content recovered in this step can be stored or distributed as a molding material for the molded wood product. That is, the solid content recovered in this step can be used as the above-described woody pellet. A preferred embodiment of the woody pellet is as described above. The woody pellet can be utilized as a molding material for thermoforming described below. Furthermore, it can be used as a material for other known thermoforming and pulp molding.

### (4) Step of thermoforming solid content

In this step, the solid content recovered in the previous step (preferably, the dehydrated solid content) or the woody pellet is subjected to thermoforming for producing a molded wood product having a predetermined shape.

### Solid content

The solid content used in this step only needs to be the solid content recovered in the previous step. The solid content may be a solid content subjected to the dehydration treatment or may be a solid content not subjected to the dehydration treatment. The woody pellet adjusted to have a water content suitable for storage or transportation may be used as the molding material in this step.

### Thermoforming

"Thermoforming" means that a material softened by heating to a predetermined temperature is provided with a specific shape by using a metallic mold. As long as the molded wood product according to an embodiment of the present disclosure is produced, the thermoforming method is not particularly limited, and vacuum molding, press molding, pressure molding, or the like can be used as appropriate. In the production method according to an embodiment of the present disclosure, the solid content or the woody pellet recovered in the previous step may be heated in a state of being put into a predetermined metallic mold, and may be further pressurized as necessary. Alternatively, after heating or after heating and pressurization, the solid content or the woody pellet may be formed (trimmed) into a predetermined shape using a known means such as cutting. Furthermore, in a case of processing into a complicated shape, a preform can be formed in advance. That is, the preform is prepared in a state where the solid content or the woody pellet is not completely dried and is kept plastic. The preform may be compressed, heated, and dried in a metallic mold to form a molded wood product having a desired shape.

The heating temperature at the time of molding may be from 60 to 210°C, from 70 to 180°C, from 80 to 150°C, or from 90 to 140°C. When the molding temperature is lower than 60°C, the molding time becomes longer and the number of shots decreases. When the molding temperature exceeds 210°C, there is a concern that the molded article may be discolored.

The pressure during molding may be from about 100 to 400 Pa. Specific examples of pressing conditions include a method in which pressing is performed at 400 kg for 30 minutes (first pressing) and then pressing is further performed at 3000 kg for 60 minutes (second pressing). That is, when a certain degree of pressure is applied in the first pressing and a higher pressure is then applied in the second pressing, a more uniform molded wood product can be produced. The same metallic mold may be used for the first pressing and the second pressing to make the pressings a continuous process. Alternatively, the preform may be prepared in the first pressing.

A known thermoforming technique for a thermosetting resin can be used for the thermoforming. Examples of the thermoforming technique include transfer molding, injection molding, cast molding (casting), and compression molding. In the thermoforming of a thermosetting resin, gas is generated from a molding material during curing, and thus a step or design for discharging the gas is made. Accordingly, the thermoforming technique of a thermosetting resin can be suitably used also in the thermoforming step in the present disclosure.

Pulp injection molding (PIM) may be applied to thermoforming of the solid content or woody pellet recovered in the previous step. That is, the solid content or the woody pellet can be filled into a metallic mold and heated and pressurized, to thereby produce the molded wood product according to an embodiment of the present disclosure.

### Drying

As long as the effects of the present disclosure are achieved, the molded wood product before and/or after the thermoforming of the recovered solid content may be dried. In addition, the recovered solid content may be subjected to deliquoring. The drying further improves the physical properties (e.g., specific gravity and strength) of the molded wood product. That is, re-formation of hydrogen bonds of cellulose or the like is increased at the time of thermoforming, and thus a molded wood product having a high specific gravity and a high toughness can be obtained. From the same viewpoint, it is possible to increase re-formation of hydrogen bonds by cellulose or the like by drying the molded wood product.

The deliquoring may be carried out by placing the recovered solid content or the woody pellet into a metallic mold and then pressurizing the metallic mold, or by bringing the inside of the metallic mold to a negative pressure. The deliquoring by applying pressure to the metallic mold may be performed in combination with the deliquoring by bringing the inside of the metallic mold to a negative pressure. The deliquoring by applying pressure to the metallic mold and/or the deliquoring by bringing the inside of the mold to a negative pressure may be further combined with deliquoring by heating. The deliquoring may be performed before heating at the time of the first pressing, or may be performed at the same time as heating.

Specifically, the recovered solid content or woody pellet may be placed in a metallic mold and allowed to stand while pressure is maintained at a low level. With this low pressurization, water is pushed out of the solid content. This pressure is sufficient if it is about 1/100 to 1/1000 of the pressure in the second pressing during the thermoforming described above. To improve the efficiency of deliquoring and drying, the solid content may be heated while pressure is maintained at a low level. The drying temperature only needs to be from about 50 to 90°C. The deliquoring/drying time depends on the amount of the solid content and the deliquoring/drying conditions, but only needs to be, for example, from about 3 hours to 12 hours.

According to the production method according to an embodiment of the present disclosure, it is possible to produce a thick molded wood product having a predetermined thickness without being limited to a shape such as a sheet or a film. Thus, various applications can be developed for a raw material containing cellulose, which has been limited in application in the related art.

### Pulverization

Depending on the cellulose-containing raw material to be used, a step of pulverizing the cellulose-containing raw material to prepare a cellulose-containing powder may be further included as an optional step before dissolving the cellulose-containing raw material in the organic acid. The pulverization makes it easier for the cellulose-containing raw material to be dissolved in the organic acid. In a case where the cellulose-containing raw material is pulp, beating may be performed. In a case where the cellulose-containing raw material is wood chip or the like, pulverization may be performed. Examples of the beating machine include a disc refiner, a schopper, and a mill. Examples of the pulverizer include a shredder, an absolute mill, a chopper, a grinder mill, and a turbo mill. This step is effective, for example, in a case where lignocellulose, in particular woody biomass, is used as the cellulose-containing raw material. For example, the woody biomass is pulverized to prepare a powder of the woody biomass (hereinafter may be referred to as "wood powder").

In a case where the pulverization step is performed for the woody biomass as a raw material, the woody biomass is preferably pulverized with an apparatus (also referred to as a "crushing machine") that pulverizes a material on the order of several tens of millimeters into particles having a size of about several millimeters to several hundreds of micrometers, from the viewpoint that structural destruction of cellulose, lignin, and the like in the woody biomass is suppressed, and the crystallinity of cellulose, and the antibacterial properties and ultraviolet absorption properties specific to lignin are maintained even after pulverization.

From the viewpoint of good workability, a powder containing no particle having a particle size of less than 100 µm is preferred, and a powder containing no particle having a particle size of 80 µm or less is more preferred. The particle size of the powder is measured by a sieve classification method using a JIS standard sieve.

Examples of the method of pulverizing the woody biomass include compression pulverization, impact pulverization, and shear pulverization. The pulverization may be dry pulverization or wet pulverization. The dry pulverization, which is capable of micron-level pulverization at low cost, is suitably used.

From the viewpoint of energy and cost reduction in the pulverization, preferable examples of the pulverizer for the woody biomass include a jaw crusher, a gyratory crusher, a crushing roll, a hammer mill, a roller mill, a cutter mill, a hammer crusher, and a Wiley mill. Two or more types of pulverizers may be used in combination. A Wiley mill, which performs pulverization by shearing and impact, is preferred. The woody biomass may be pulverized in a continuous or batch-wise manner. Before the pulverization by the pulverizer, the woody biomass may be made into small pieces (chips) using a known cutter, chipper, or the like. Such a pulverizer can be used not only for pulverizing the woody biomass but also for disintegrating pulp. For example, in a case of disintegrating pulp, a disc refiner, a turbo mill, or a disintegration device combining these can be suitably used.

### Examples

The effects of the present disclosure will be clarified by the examples below, but the present disclosure should not be construed as being limited based on the description of the examples.

### Test 1

### Example 1 to Example 3

Woody sheets of Examples 1 to 3 were produced by using the raw materials (woody biomass) shown in Table 1 according to the following procedure. Specifically, chips of the raw material (woody biomass) were pulverized using a Wiley mill equipped with a 20-mesh sieve, and then the resulting powder was classified using a JIS standard sieve. Particles that passed through a sieve having an opening of 500 µm and did not pass through a sieve having an opening of 355 µm were collected, to prepare a wood powder (particle size: from 355 to 500 µm).

The prepared wood powder was charged into a vial having a capacity of 50 ml in an amount shown in Table 1, and 10 ml of formic acid having a concentration of 80 wt.% (available from Nacalai Tesque, Inc.) was added to the vial under a nitrogen gas atmosphere. Subsequently, the vial was placed in a vacuum desiccator, and allowed to stand for 30 minutes under a reduced pressure of -0.098 MPa. Thereafter, the vial was heated to 40°C under atmospheric pressure, and stirring was initiated. After the elapse of 6 days, it was confirmed by visual observation that the wood powder disappeared and a homogeneous solution was obtained.

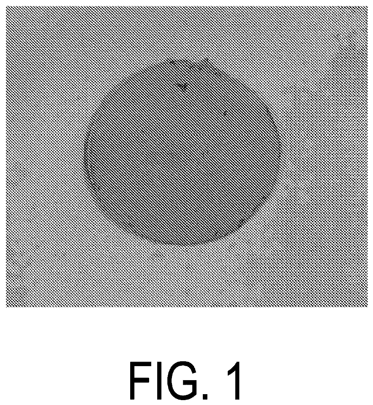

Next, while the vial containing this solution was cooled with ice under stirring, a 10 N aqueous sodium hydroxide solution was added dropwise thereto in such a manner that the pH shown in Table 1 was achieved, thereby carrying out a saponification treatment. During the dropwise addition of the aqueous sodium hydroxide solution, foaming of the solution and precipitation of a solid substance were observed. The resultant sample was filtered under reduced pressure, and the filtration residue was washed with distilled water until the filtrate became neutral (pH of 7 to 8) to recover the precipitated solid content. The resultant solid content was dehydrated and then heated to 80°C under a load of 2.5 kg to produce a woody sheet. Table 1 shows the yield (%) determined from the weight of the produced sheet and the amount of the wood powder added. FIG. 1 illustrates a photograph of the appearance of the woody sheet of Example 1.

### Example 4

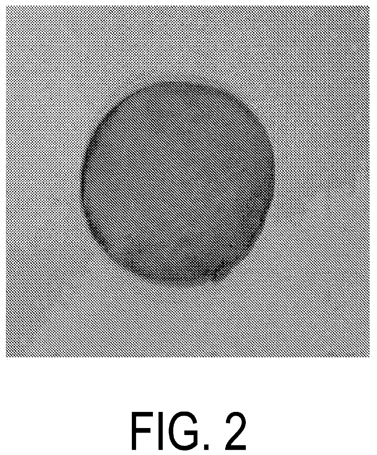

A woody sheet of Example 4 was produced in the same manner as in Examples 1 to 3 except that the type of the raw material (woody biomass) and dissolution conditions were changed as shown in Table 1, and the saponification treatment was replaced by a dialysis treatment and water was added. FIG. 2 illustrates a photograph of the appearance of the woody sheet of Example 4. The dialysis treatment was carried out by transferring the entire amount of the solution in which the woody biomass was dissolved to a dialysis membrane (trade name "Spectra/Por 7, MWCO1000" available from Funakoshi Co., Ltd.) and immersing the membrane in distilled water. The dialysis treatment was continued while distilled water was changed twice a day until the distilled water became neutral (pH of 7 to 8).

### Specific gravity

The specific gravity (g/cm³) of each of the woody sheets of Examples 1 to 4 was measured in accordance with JIS Z 8807 "Methods of measuring density and specific gravity of solid". The average of five measurement values of each of the woody sheets is shown in Table 1 below.

### Scanning electron microscopic observation

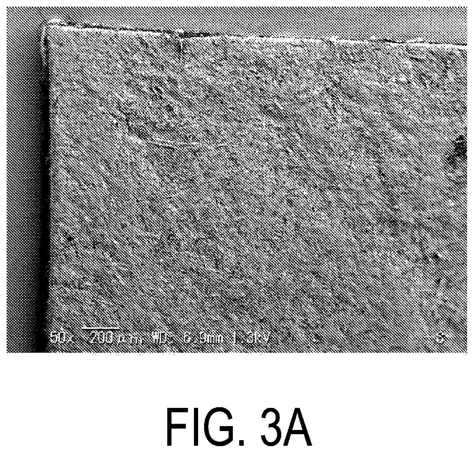

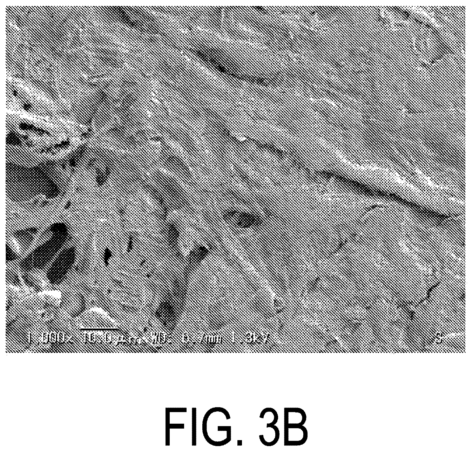

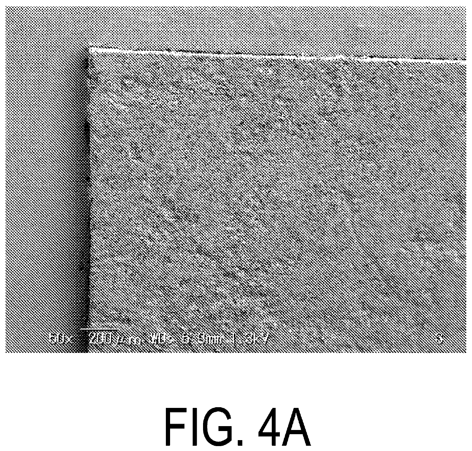

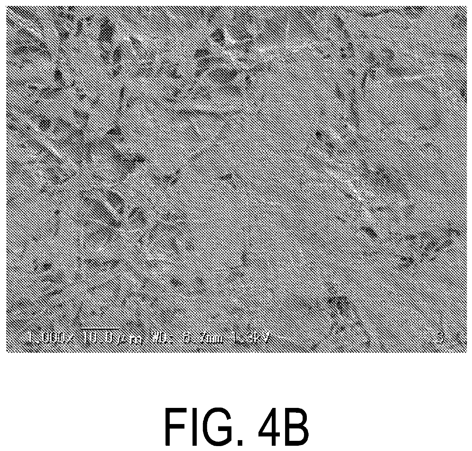

The surface states of the woody sheets of Examples 1 and 4 were observed using a scanning electron microscope. FIG. 3 illustrates the surface state (magnification: 50 times (3A), 1000 times (3B)) of the woody sheet of Example 1. FIG. 4 illustrates the surface state (magnification: 50 times (4A), 1000 times (4B)) of the woody sheet of Example 4.

**[Table 1]**

| | | Example 1 | Example 2 | Example 3 | Example 4 |
|---|---|---|---|---|---|
| Raw material | [-] | Cedar sapwood | Cedar heartwood | Eucalyptus | Cedar sapwood |
| Particle size | [µm] | 355 to 500 | 355 to 500 | 355 to 500 | 355 to 500 |
| Amount of wood powder | [mg] | 99.0 | 98.7 | 105.1 | 102.8 |
| Dissolution time | [days] | 6 | 6 | 6 | 8 |
| Precipitation treatment | [-] | Saponification (pH 3) | Saponification (pH 11) | Saponification (pH 11) | Dialysis |
| Yield | [%] | 81.0 | 71.3 | 54.1 | 71.9 |
| Specific gravity | [g/cm³] | 0.695 | 0.831 | 0.941 | 0.818 |

### Example 5

Cedar sapwood chips were pulverized using a Wiley mill equipped with a 20-mesh sieve, and then classified using a JIS standard sieve. Particles that passed through a sieve having an opening of 1000 µm and did not pass through a sieve having an opening of 500 µm were collected, to prepare a wood powder (particle size: from 500 to 1000 µm).

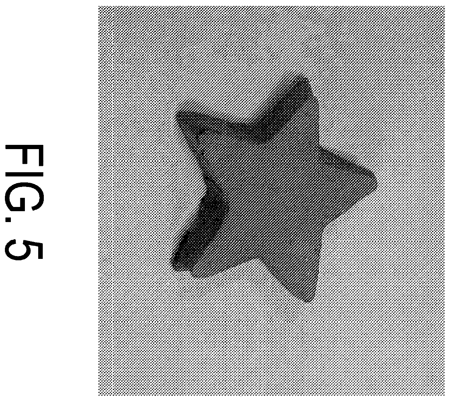

Next, the wood powder was mixed with 80 ml of formic acid (available from Nacalai Tesque, Inc.) having a concentration of 80 wt.% to achieve a wood powder concentration of 2% (w/v) under a nitrogen atmosphere, and then the mixture was allowed to stand for 30 minutes under a reduced pressure of -0.098 MPa. Thereafter, the temperature was raised to 40°C at normal pressure, and the mixture was stirred for 8 days to prepare a wood powder solution. To the resultant solution, 60 ml of 10 N aqueous sodium hydroxide solution was added dropwise under ice-cooling to adjust the pH to 3.0. Thereafter, the mixture was centrifuged (centrifugal force: 10000 g, time: 10 min) to recover a precipitated solid content. The solid content was washed five or more times with ultrapure water, then placed in a stainless steel mold (star shape), and heated at 80°C for 24 hours under a load of 2.5 kg to produce a molded body of Example 5 (thickness: 3.65 to 5.97 mm, yield: 82.0%). FIG. 5 illustrates a photograph of the appearance of the molded body of Example 5.

### Test 2

### Example 6 to Example 11

Chips of each of the raw materials (woody biomass) shown in Table 2 and Table 3 were pulverized using a Wiley mill equipped with a 20-mesh sieve, and then classified using a JIS standard sieve. Particles that passed through a sieve having an opening of 1000 µm and did not pass through a sieve having an opening of 500 µm were collected, to prepare a wood powder (particle size: from 500 to 1000 µm).

Next, the prepared wood powder was dissolved in formic acid (available from Nacalai Tesque, Inc.) having a concentration of 80 wt.% in the same manner as in Example 1. Thereafter, a 10 N aqueous sodium hydroxide solution was added dropwise to the solution under ice-cooling to carry out a saponification treatment. The pH of the solution after the saponification treatment is shown in Table 2 and Table 3. Each of the resultant samples was filtered under reduced pressure, and the filtration residue was washed with distilled water until the filtrate became neutral (pH of 7 to 8) to recover a solid content.

Subsequently, each of the recovered solid contents was added to 50 ml of distilled water to prepare a dispersion. After the resulting dispersion was filtered, the solid content was collected and heated at 80°C for 24 hours under a load of 2.5 kg to produce a woody sheet having a thickness of 20 to 50 µm.

### Comparative Example 1 to Comparative Example 3

Chips of each of the raw materials (woody biomass) shown in Table 4 were pulverized using a Wiley mill equipped with a 20-mesh sieve, and then classified using a JIS standard sieve. Particles that passed through a sieve having an opening of 1000 µm and did not pass through a sieve having an opening of 500 µm were collected, to prepare a wood powder (particle size: from 500 to 1000 µm).

Next, each wood powder was dissolved in formic acid (available from Nacalai Tesque, Inc.) having a concentration of 80 wt.% in the same manner as in Example 1. Subsequently, each of the resulting solutions was cast onto cellophane, allowed to stand on a culture dish having a lid at room temperature overnight, and then subjected to pressure reduction for 3 hours, thereby producing a sheet having a thickness of 20 to 50 µm. In Comparative Examples 1 to 3, a precipitation treatment (insolubilization treatment) of the solution was not performed.

### Tensile property evaluation

Each of the sheets of Examples 6 to 11 and Comparative Examples 1 to 3 was punched into a dumbbell shape (dumbbell No.7) to prepare a test piece for a tensile test. The tensile test was performed using a tensile tester (trade name "Universal Tensile Tester (Tensilon) RTG-1310" available from A&D Company, Limited). The tensile test (tensile speed: 2 mm/min, distance between clamps: 20 mm, distance between marked lines: 12 mm) was carried out in accordance with ISO 527-1 standard to measure maximum stress (unit: MPa), maximum elongation (unit: %), and elastic modulus (Young's modulus) (unit: MPa) in Examples 6 to 11 and Comparative Examples 1 to 3 (temperature: 23°C, humidity: 50%). The average of five measurement values of each property is shown in Tables 2 to 4.

**[Table 2]**

| | | Example 6 | Example 7 | Example 8 |
|---|---|---|---|---|
| Raw material | [-] | Eucalyptus | Cedar sapwood | Cedar heartwood |
| Particle size | [µm] | 500 to 1000 | 500 to 1000 | 500 to 1000 |
| Precipitation treatment | [-] | Saponification (pH 11) | Saponification (pH 11) | Saponification (pH 11) |
| Maximum stress | [MPa] | 21.6 | 4.9 | 8.3 |
| Maximum elongation | [%] | 3.4 | 1.8 | 1.4 |
| Elastic modulus | [MPa] | 1063 | 372 | 813 |

**[Table 3]**

| | | Example 9 | Example 10 | Example 11 |
|---|---|---|---|---|
| Raw material | [-] | Eucalyptus | Cedar sapwood | Cedar heartwood |
| Particle size | [µm] | 500 to 1000 | 500 to 1000 | 500 to 1000 |
| Precipitation treatment | [-] | Saponification (pH 3) | Saponification (pH 3) | Saponification (pH 3) |
| Maximum stress | [MPa] | 28.3 | 4.1 | 6.0 |
| Maximum elongation | [%] | 4.1 | 1.6 | 1.5 |
| Elastic modulus | [MPa] | 1245 | 331 | 583 |

**[Table 4]**

| | | Comparative Example 1 | Comparative Example 2 | Comparative Example 3 |
|---|---|---|---|---|
| Raw material | [-] | Eucalyptus | Cedar sapwood | Cedar heartwood |
| Particle size | [µm] | 500 to 1000 | 500 to 1000 | 500 to 1000 |
| Precipitation treatment | [-] | - | - | - |
| Maximum stress | [MPa] | 3.09 | 2.17 | 0.59 |
| Maximum elongation | [%] | 1.16 | 1.19 | 1.10 |
| Elastic modulus | [MPa] | 335 | 210 | 84 |

As shown in Table 1, according to the production method of the Examples, a molded wood product having a high specific gravity can be produced without using a petroleum-based chemical having a high environmental load. In addition, as shown in Tables 2 to 4, the molded wood products of the Examples produced through the precipitation treatment by addition of water or an alkali have more excellent mechanical properties than the molded articles of the Comparative Examples.

### Test 3

In Test 3, molded wood products of Examples 12 and 13 were produced by using a cellulose-containing raw material containing substantially no lignin and having a very low hemicellulose content.

### Example 12

18 g of cotton linter (available from ADM Southern Cellulose Inc., α-cellulose content: 99% or more) was weighed in a medium bottle having a capacity of 1 L, and 500 g of formic acid (available from Nacalai Tesque, Inc.) having a concentration of 80 wt.% was added thereto. Subsequently, a pressure reducing pump was connected to the medium bottle to reduce the pressure for 30 minutes, and then 382 g of formic acid having a concentration of 80 wt.% and a stirring bar were added to the medium bottle, followed by stirring in an oil bath at 50°C and 500 rpm for 7 days, to prepared a homogeneous solution (concentration: 2 wt.%, total weight: 900 g).

The prepared solution was charged into an eggplant-shaped flask having a capacity of 1 L, and the solvent was distilled off using an evaporator until the total weight of the content reached about 200 g, to prepare a concentrated liquid. The concentrated liquid was charged into an Erlenmeyer flask having a capacity of 2 L, and distilled water was added thereto in such a manner that the total volume of the liquid was about 1 L. Thereafter, while the Erlenmeyer flask was cooled and vigorously stirred, a 10 N aqueous sodium hydroxide solution was added thereto until the pH of the content reached about 12. The pH of the content was confirmed using a commercially available pH meter. Subsequently, distilled water was added until the total volume reached about 1.8 L, and the mixture was slowly stirred overnight at normal temperature to precipitate a solid content. The resultant treated liquid was filtered using filter paper (ADVANTEC No. 131, 150 mm diameter), and the filtration residue was then washed with distilled water until the filtrate became neutral (pH of 7 to 8). The filtration residue was suspended in 1 L of distilled water, and then the suspension was centrifuged at 4000 G for 10 minutes using a swing rotor, to recover a solid content of Example 12. The solid content of Example 12 was subjected to Fourier transform infrared spectroscopy (FTIR spectroscopy). As a result, it was confirmed that an absorption peak attributed to a formyl group was not present in a region of 1715 to 1720 cm⁻¹ of the infrared absorption spectrum.

### Example 13

A solid content of Example 13 was produced in the same manner as in Example 12 except that alkali addition was not performed for the precipitation treatment. Specifically, a concentrated liquid prepared in the same manner as in Example 12 was charged into an Erlenmeyer flask having a capacity of 2 L, and distilled water was added thereto in such a manner that the total volume of the liquid was about 1 L. Thereafter, distilled water was added until the total volume of the liquid reached about 1.8 L, and the mixture was slowly stirred overnight at normal temperature, followed by filtration, washing, and centrifugation under the same conditions as in Example 12, to recover the solid content of Example 13. The solid content of Example 13 was subjected to Fourier transform infrared spectroscopy (FTIR spectroscopy). As a result, it was confirmed that an infrared absorption peak attributed to a formyl group was present at 1715 cm⁻¹ of the infrared absorption spectrum.

### Adjustment and physical properties of molded wood body

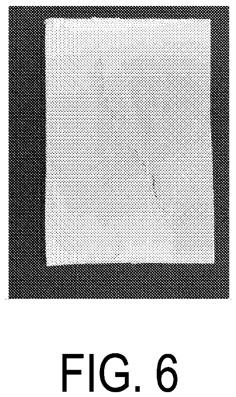

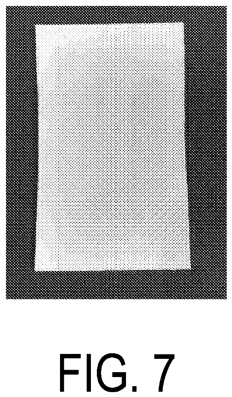

Each of the solid contents of Examples 12 and 13 was charged into a metallic mold equipped with a polypropylene sheet, and then compacted with a spatula. Next, an operation of pressing Kimtowel against a surface of the solid content for dehydration was repeated 5 to 6 times, and then a polypropylene sheet and a metal plate were sequentially placed on the solid content. The resultant product was set in a hot press machine set at a temperature of 80°C, pressed at 400 kg for 30 minutes, and further pressed at 3000 kg for 60 minutes. Thereafter, a block having a weight of 2.5 kg was placed on the molded body taken out from the metallic mold, followed by drying in an air dryer at 80°C overnight. Subsequently, the molded body was dried under reduced pressure overnight while being placed on a silica gel plate, to produce a molded body of each of Examples 12 and 13. FIGS. 6 and 7 illustrate photographs of the appearances of the molded bodies of Examples 12 and 13, respectively.

The yield (wt.%), specific gravity (g/cm³), and contact angle (degree) of each of the produced molded bodies are shown in Table 5. The yield was calculated as a ratio of the weight of the molded body to the weight of the raw material used. The method of measuring the specific gravity is as described above. The contact angle was measured according to the following method.

### Contact angle

The contact angle in the present disclosure is a dynamic contact angle determined by measuring a change in contact angle from that immediately after dropping of a liquid droplet. Measurement of the dynamic contact angle requires specifying a time. The contact angle was measured using a contact angle meter (available from Nick Corporation). The contact angle was measured three times in a contact angle measurement mode with a maximum measurement time of 601 seconds (0 to 1 second and 1 to 601 seconds), and the average of the measured values was determined. The maximum contact angle for 0 to 1 second after dropping of distilled water is shown in Table 5.

**[Table 5]**

| | | Example 12 | Example 13 |
|---|---|---|---|
| Raw material | [-] | Cotton linter | Cotton linter |
| Precipitation treatment | [-] | Saponification (pH 11) | Hydration-mixing |
| Yield | [%] | 94.9 | 95.1 |
| Specific gravity | [g/cm³] | 1.16 | 1.18 |
| Contact angle | [degree] | 25 | 27 |

As shown in Table 5, it was confirmed that a molded wood product having high specific gravity and hydrophilicity can be produced from a raw material containing cellulose as a main component.

### Test 4

### Example 14 and Example 16

Chips of each of the raw materials (woody biomass) shown in Table 6 were pulverized using a Wiley mill equipped with a 20-mesh sieve, and then classified using a JIS standard sieve. Particles that passed through a sieve having an opening of 1000 µm and did not pass through a sieve having an opening of 500 µm were collected, to prepare a wood powder (particle size: from 500 to 1000 µm). As shown in Table 5, the water content of the cedar wood powder of Example 14 was 8.40 wt.%, and the water content of the eucalyptus wood powder of Example 16 was 10.03 wt.%.

Next, 18 g of the prepared wood powder was weighed in a medium bottle having a capacity of 1 L, and 500 g of formic acid (available from Nacalai Tesque, Inc.) having a concentration of 80 wt.% was added thereto. Subsequently, a pressure reducing pump was connected to the medium bottle to reduce the pressure for 30 minutes, and then 382 g of formic acid having a concentration of 80 wt.% and a stirring bar were added to the medium bottle, followed by stirring in an oil bath at 50°C and 300 rpm for 7 days, to prepare a homogeneous solution (wood powder concentration: 2 wt.%, total weight: 900 g).

The prepared solution was charged into an eggplant-shaped flask having a capacity of 1 L, and the solvent was distilled off using an evaporator until the total weight of the content reached about 350 g, to prepare a concentrated liquid. The concentrated liquid was charged into an Erlenmeyer flask having a capacity of 2 L, and distilled water was added thereto in such a manner that the total volume of the liquid was about 1 L. Thereafter, distilled water was further added until the total volume reached about 1.8 L, and the mixture was slowly stirred overnight at normal temperature to precipitate a solid content. The resultant treated liquid was filtered using filter paper (ADVANTEC No. 131, 150 mm diameter), and the filtration residue was then washed with distilled water until the filtrate became neutral (pH of 7 to 8). The filtration residue was suspended in 1 L of distilled water, and then the suspension was centrifuged at 4000 G for 10 minutes using a swing rotor, to recover the solid contents of Examples 14 and 16. Each of the solid contents of Examples 14 and 16 was subjected to Fourier transform infrared spectroscopy (FTIR spectroscopy). It was confirmed that an infrared absorption peak attributed to a formyl group was present at 1720 cm⁻¹ of the infrared absorption spectrum.

### Examples 15 and 17

Solid contents of Examples 15 and 17 were produced in the same manner as in Examples 14 and 16 except that the raw materials shown in Table 6 were used and an alkali was added to perform the saponification treatment as the precipitation treatment. Specifically, a concentrated liquid prepared in the same manner as in Examples 14 and 16 was charged into an Erlenmeyer flask having a capacity of 2 L, and distilled water was added thereto in such a manner that the total volume of the liquid was about 1 L. Thereafter, while the Erlenmeyer flask was cooled, a 10 N aqueous sodium hydroxide solution was added thereto with stirring until the pH of the content reached about 12. Subsequently, distilled water was added to the flask until the total volume reached about 1.8 L, and the mixture was slowly stirred overnight at normal temperature, followed by filtration, washing, and centrifugation under the same conditions as in Examples 14 and 16, to recover solid contents of Examples 15 and 17. Sugar cane bagasse (water content: 7.34 wt.%) was used as the bagasse in Example 17.

### Adjustment and physical properties of molded wood body

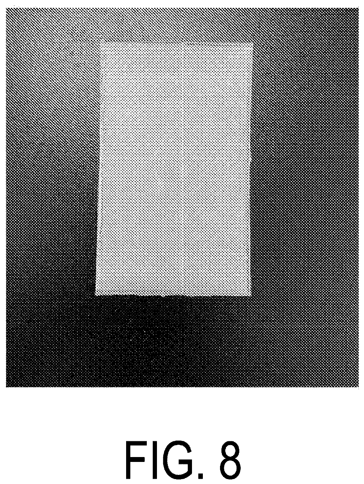

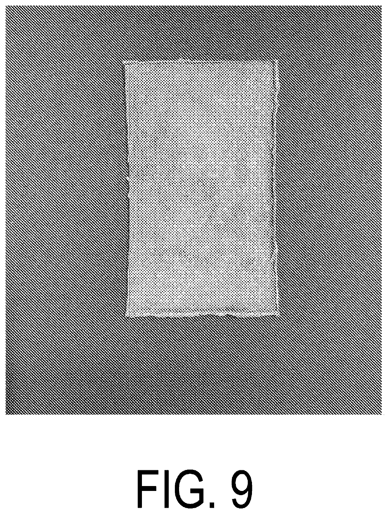

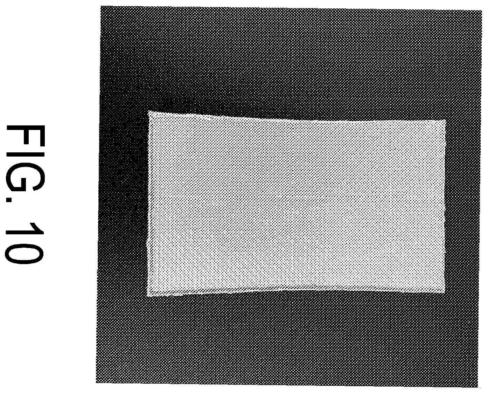

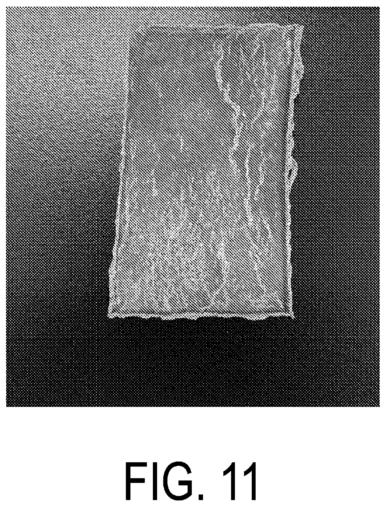

Each of the solid contents of Examples 14 to 17 was charged into a metallic mold equipped with a polypropylene sheet, and then compacted with a spatula. Next, an operation of pressing Kimtowel against a surface of the solid content to dehydrate the solid content was repeated 5 to 6 times, and then a polypropylene sheet and a metal plate were sequentially placed on the solid content. The resultant product was set in a hot press machine set at a temperature of 80°C, and pressed at 0.65 MPa for 30 minutes and at 4.9 MPa for 60 minutes. Thereafter, a block having a weight of 2.5 kg was placed on the molded body taken out from the metallic mold, followed by drying in an air dryer at 80°C overnight. Subsequently, the molded body was dried under reduced pressure overnight while being placed on a silica gel plate, to produce a molded body of each of Examples 14 to 17. FIGS. 8 to 11 illustrate photographs of the appearances of the molded bodies of Examples 14 to 17. The surfaces of the molded bodies of Examples 14 to 17 were smooth with less recesses and protrusions as compared with the surfaces of the molded bodies of Examples 12 and 13. It was considered that, in Examples 14 to 17, a woody biomass was used as a raw material, and thus lignin or hemicellulose filled gaps between cellulose fibers, thereby smoothing the surfaces.

Table 6 shows the yield (wt.%), thickness (mm), specific gravity (g/cm³), contact angle, ash content (wt.%), and total lignin content (wt.%) of the molded bodies of Examples 14 to 17. The methods for measuring the yield, specific gravity, and contact angle are as described above. The ash content and the total lignin content were measured according to an NREL method. The specific method is as follows.

### Ash content

A sample taken from each molded body was left to stand in an electric furnace and treated according to a temperature program of maintaining at 105°C for 12 minutes, raising the temperature to 250°C at 10°C/min, maintaining at 250°C for 30 minutes, raising the temperature to 575°C at 20°C/min, maintaining at 575°C for 3 hours, and cooling to 105°C. The residue after the treatment was weighed, and the ratio of the weight of the residue to the weight of the sample before the treatment was calculated as the ash content (wt.%).

### Total lignin content

300 mg of a sample was collected from each molded body, and pulverized as necessary. Thereafter, the sample was charged into a test tube together with 3.0 ml of sulfuric acid having a concentration of 72 wt.%, and left to stand in a water bath at 30°C for hydrolysis. The agglomerated sample was crushed with a glass rod every 5 to 10 minutes and allowed to stand for 60 minutes. Then, 84 ml of deionized water was added to the test tube to adjust the sulfuric acid concentration to 4 wt.%. Subsequently, hydrolysis was further performed in an autoclave at 121°C for 1 hour. The resulting reaction liquid was filtered, and the filtration residue was washed with water to prepare a filtrate containing acid-soluble lignin and a filtration residue containing acid-insoluble lignin. The amount of acid-insoluble lignin was determined by measuring the dry weight of the filtration residue. In addition, the absorbance of the resultant filtrate at 205 nm was measured using 4% sulfuric acid as a reference cell, and the amount of acid-soluble lignin in the filtrate was calculated using an absorption coefficient of 110 (L/g·cm). The amount of acid-insoluble lignin and the amount of acid-soluble lignin were each measured twice, and the average of the measured values was determined. The total amount of acid-insoluble lignin and acid-soluble lignin is defined as the total lignin content. Table 6 shows the ratio of each amount to the total weight of the measurement sample.

**[Table 6]**

| | | | Example 14 | Example 15 | Example 16 | Example 17 |
|---|---|---|---|---|---|---|
| Raw material | | [-] | Cedar | Cedar | Eucalyptus | Bagasse |
| Particle size | | [µm] | 500 to 1000 | 500 to 1000 | 500 to 1000 | 500 to 1000 |
| Precipitation treatment | | [-] | Hydration-mixing | Saponification (pH 12) | Hydration-mixing | Saponification (pH 12) |
| Yield | | [%] | 85.9 | 79.4 | 64.1 | 44.2 |
| Thickness | | [%] | 2.39 | 2.25 | 1.58 | 1.25 |
| Specific gravity | | [%] | 1.07 | 1.07 | 1.30 | 1.27 |
| Contact angle | | [degree] | 63 | 57 | 56 | 46 |
| Ash content | | [%] | 0.2 | 0.9 | 0.4 | 2.2 |
| Total lignin content | | [%] | 42.0 | 39.8 | 22.1 | 13.3 |
| | Acid-insoluble lignin | [%] | 41.6 | 39.5 | 20.1 | 12.8 |
| | Acid-soluble lignin | [%] | 0.4 | 0.3 | 2.0 | 0.5 |

### Saccharide composition analysis

Saccharide composition analysis was performed on the molded bodies of Examples 14 to 16 by using the NREL method. Specifically, a sample was collected from each molded body, and hydrolysis was performed under the same conditions as in the analysis method of the total lignin content. Thereafter, the resultant reaction liquid was filtered to produce a filtrate. After an appropriate amount of calcium carbonate was added to the filtrate for neutralization, the mixture was subjected to centrifugation (centrifugal force: 10000 g, time: 10 min), and the supernatant was collected. The supernatant was filtered using a filter having a pore size of 0.2 µm, and then subjected to high performance liquid chromatography (HPLC measurement) under the following measurement conditions.
Column: Aminex HPX-87P (available from Bio-Rad Laboratories, Inc.) 2 columns
Mobile phase: ultrapure water
Flow rate: 0.6 mL/min
Column temperature: 65°C
Detector: differential refractive index detector (RID)
Retention time: 50 min
Injection amount: 5 µL

Calibration curves were prepared for six monosaccharides (cellobiose, glucose, xylose, galactose, arabinose, and mannose) at concentrations ranging from 0.1 to 5.0 mg/ml, and the prepared calibration curves were used. The contents of the respective monosaccharides after hydrolysis in each molded body were determined from the obtained HPLC measurement values, and the contents were converted into those of polysaccharides (glucan, xylan, galactan, arabinan, and mannan) to determine the saccharide composition in each of Examples 14 to 16. The results are shown in Table 7.

### Tensile property and flexural property evaluation

A test piece (1 cm in width and 5 cm in length) for a tensile test and a flexural test was cut out from each of the molded bodies of Examples 14 to 16. Tensile properties and flexural properties were measured by using trade name "universal tensile tester (Tensilon) RTG-1310" available from A&D Company, Limited as a measuring apparatus in accordance with ISO 527-1 standard (temperature: 23°C, relative humidity: 50%). The measurement conditions are as follows. The results are shown in Table 7.
Tensile test
   Load cell: 1000 N
   Tensile speed: 10 mm/min
   Distance between clamps: 20 mm
Flexural test (three-point flexural test)
   Load cell: 1000 N
   Tensile speed: 2 mm/min
   Inter-fulcrum distance: 30 mm

**[Table 7]**

| | | | Example 14 | Example 15 | Example 16 |
|---|---|---|---|---|---|
| Raw material | | [-] | Cedar | Cedar | Eucalyptus |
| Precipitation treatment | | [-] | Hydration-mixing | Saponification (pH 12) | Hydration-mixing |
| Ash content | | [%] | 0.2 | 0.9 | 0.4 |
| Glucan | | [%] | 49.2 | 54.6 | 73.7 |
| Xylan | | [%] | 2.4 | 2.1 | 3.4 |
| Galactan | | [%] | 1.9 | 1.3 | 2.2 |
| Arabinan | | [%] | 1.0 | 0.7 | 0.5 |
| Mannan | | [%] | 3.8 | 3.1 | 2.1 |
| Total lignin content | | [%] | 42.0 | 39.8 | 22.0 |
| Tensile property | | | | | |
| | Maximum stress | [MPa] | 27.1 | 23.6 | 43.2 |
| | Maximum elongation | [%GL] | 2.56 | 2.09 | 2.89 |
| | Maximum load | [N] | 669.1 | 536.8 | 712.4 |
| | Maximum stretch | [mm] | 0.51 | 0.42 | 0.58 |
| | Elastic modulus | [MPa] | 1297 | 1402 | 1833 |
| Flexural property | | | | | |
| | Maximum stress | [MPa] | 52.9 | 63.0 | 86.4 |
| | Maximum elongation | [%GL] | 1.56 | 1.88 | 2.01 |
| | Maximum load | [N] | 63.3 | 77.0 | 53.9 |
| | Maximum stretch | [mm] | 1.02 | 1.24 | 1.83 |
| | Elastic modulus | [MPa] | 4285 | 4267 | 6282 |

The results of Test 4 indicated that a smooth molded wood product with less cracking and deformation was produced in the Examples, in which the cellulose-containing raw material, in particular, the woody biomass, was used as a raw material. As shown in Table 7, it was confirmed that the flexural properties (maximum stress and elastic modulus) of the molded wood products of Examples 14 to 17 were equal to or higher than those of general-purpose resins, such as ABS resin (flexural strength: 64 MPa, flexural modulus: 2500 MPa) and polycarbonate (flexural strength: 85 MPa, flexural modulus: 2300 MPa). From the above evaluation results, the superiority of the present disclosure is clear. The production method of the present disclosure can be applied to utilization of various plant-based biomasses.

## Claims

1. A molded wood product comprising cellulose as a main component, wherein the molded wood product satisfies either or both of (1) and (2) described below:
(1) a flexural modulus determined by a flexural test in accordance with ISO 527-1 standard is 4000 MPa or more; and
(2) a flexural strength determined by a flexural test in accordance with ISO 527-1 standard is 50 MPa or more.

2. The molded wood product according to claim 1, further comprising lignin and having a specific gravity of 0.5 g/cm³ or more.

3. The molded wood product according to claim 1 or 2, having a specific gravity of 0.9 g/cm³ or more.

4. The molded wood product according to claim 1 or 2, wherein the molded wood product exhibits an absorption peak in a region from 1715 to 1720 cm⁻¹ of an infrared absorption spectrum of the molded wood product.

5. The molded wood product according to claim 1 or 2, further comprising a fibrous substance, wherein the fibrous substance has a cellulose I crystal structure.

6. The molded wood product according to claim 1, further comprising lignin, wherein
a total lignin content is 15 wt.% or more and 80 wt.% or less.

7. The molded wood product according to claim 1, further comprising hemicellulose and lignin, wherein
a total lignin content is 20 wt.% or more and 45 wt.% or less; and
constituent proportions of polysaccharides determined by saccharide composition analysis satisfy the following:
glucan: 40 wt.% or more and 80 wt.% or less;
xylan: 0.1 wt.% or more and 3.0 wt.% or less;
arabinan: 0.2 wt.% or more and 3.0 wt.% or less; and
mannan: 1.0 wt.% or more and 5.0 wt.% or less.

8. A woody pellet being a molding material of the molded wood product described in claim 1 or 2, the woody pellet comprising cellulose, hemicellulose, and lignin, wherein
the woody pellet exhibits an absorption peak in a region from 1715 to 1720 cm⁻¹ of an infrared absorption spectrum of the woody pellet;
a total lignin content is 20 wt.% or more and 45 wt.% or less; and
constituent proportions of polysaccharides determined by saccharide composition analysis satisfy the following:
glucan: 40 wt.% or more and 80 wt.% or less;
xylan: 0.1 wt.% or more and 3.0 wt.% or less;
arabinan: 0.2 wt.% or more and 3.0 wt.% or less; and
mannan: 1.0 wt.% or more and 5.0 wt.% or less.

9. A woody pellet being a molding material of the molded wood product described in claim 1 or 2, the woody pellet comprising cellulose, hemicellulose, and lignin, wherein
the cellulose has a cellulose I crystal structure;
a total lignin content is 10 wt.% or more and 45 wt.% or less; and constituent proportions of polysaccharides determined by saccharide composition analysis satisfy the following:
glucan: 55 wt.% or more and 80 wt.% or less;
xylan: 0.1 wt.% or more and 5.0 wt.% or less;
arabinan: 0.2 wt.% or more and 1.0 wt.% or less; and
mannan: 1.0 wt.% or more and 3.0 wt.% or less.

10. A method for producing the molded wood product described in claim 1, the method comprising:
dissolving a cellulose-containing raw material in an organic acid to prepare a cellulose-containing solution;
adding water or an alkali to the cellulose-containing solution to precipitate a solid content;
recovering the solid content; and
thermoforming the recovered solid content, wherein
a main component of the solid content is cellulose.

11. The method for producing the molded wood product according to claim 10, wherein, in the precipitation of the solid content, a pH of the cellulose-containing solution is adjusted to 3 or higher.

12. The method for producing the molded wood product according to claim 10 or 11, wherein the recovered solid content is charged into a metallic mold and thermoformed at a temperature of 60°C or higher and 210°C or lower and at a pressure of 100 Pa or more and 400 Pa or less.

13. The method for producing the molded wood product according to claim 10 or 11, further comprising subjecting the recovered solid content to deliquoring before thermoforming.

14. The method for producing the molded wood product according to claim 10 or 11, further comprising pulverizing the cellulose-containing raw material to prepare a cellulose-containing powder before dissolving the cellulose-containing raw material in the organic acid.
